# EUROPEAN PATENT APPLICATION

(11) **EP 4 622 335 A1**
(43) Date of publication of application: **24.09.2025**
(21) Application number: 23907552.6
(22) Date of filing: 12.12.2023
(51) Int. Cl.: H04W 28/02, H04W 24/10, H04L 47/10, H04L 69/22, H04L 65/65, H04L 65/80, H04L 67/131

(54) **METHOD AND DEVICE FOR CONGESTION REPORTING CONSIDERING USER EQUIPMENT MOBILITY IN WIRELESS COMMUNICATION SYSTEM**

(30) Priority: 23.12.2022 KR 20220183308; 04.01.2023 KR 20230001338
(71) Applicant: Samsung Electronics Co., Ltd., Suwon-si, Gyeonggi-do 16677 (KR)
(72) Inventor: BAEK, Youngkyo, Suwon-si, Gyeonggi-do 16677 (KR)
(74) Representative: Nederlandsch Octrooibureau
(86) International application number: PCT/KR2023/020436
(87) International publication number: WO 2024/136266

(57) **Abstract**

The present disclosure relates to a 5G or 6G communication system for supporting a higher data transfer rate. In addition, the present disclosure relates to a method and a device for correctly reporting a network congestion situation to an application server in a wireless communication system.

## Description

### [Technical Field]

Various embodiments of the present disclosure relate to a method and device for correctly reporting a network congestion situation to an application server in a wireless communication system by appropriately configuring a method for congestion reporting according to a modification in a network function due to UE mobility in a wireless communication system. The present disclosure relates to a method and device for processing real-time transmission data to safely provide an extended reality (XR) service in a wireless communication system.

### [Background Art]

5G mobile communication technology defines a wide frequency band to enable fast transmission speeds and new services, and can be implemented not only in a sub-6GHz frequency band such as 3.5 gigahertz (3.5GHz), but also in a ultra-high frequency band ('above 6GHz') called millimeter wave (mmWave) such as 28GHz and 39GHz. In addition, in the case of 6G mobile communication technology, which is called systems beyond 5G communication, implementation in a terahertz band (e.g., 95GHz to 3 terahertz (3THz) band) is being considered to achieve a transmission speed that is 50 times faster than the 5G mobile communication technology and a ultra low latency time that is reduced by 1/10.

In the early stages of the 5G mobile communication technology, with the goal of ensuring service support and performance requirements for enhanced mobile broadband (eMBB), ultra-reliable low-latency communications (URLLC), and massive machine-type communications (mMTC), standardization has been made for beamforming and massive MIMO for mitigating a path loss of radio waves in a ultra-high frequency band and increase a transmission distance of the radio waves, support for various numerologies for efficient utilization of ultra-high frequency resources (operation of multiple subcarrier intervals, etc.) and dynamic operation of slot formats, initial access technology for supporting multi-beam transmission and broadband, definition and operation of a band-wide part (BWP), new channel coding methods, such as a low density parity check (LDPC) code for large-scale data transmission and a polar code for high reliable transmission of control information, L2 pre-processing, network slicing providing a dedicated network specialized for a specific service, etc.

Currently, discussions are underway for improvement and performance enhancement of the initial 5G mobile communication technology in consideration of services that the 5G mobile communication technology is intended to support, and physical layer standardization is in progress for technologies such as vehicle-to-everything (V2X) to help autonomous vehicles determine their driving based on their own locations and status information that the autonomous vehicles transmit and to increase user convenience, new radio unlicensed (NR-U) for system operation that meets various regulatory requirements in an unlicensed band, NR UE low power consumption technology (UE power saving), a non-terrestrial network (NTN) that is UE-satellite direct communication to secure coverage in areas where communication with a terrestrial network is impossible, and positioning.

In addition, standardization of wireless interface architecture/protocol fields is in progress for technologies such as industrial Internet of Things (IIoT) for supporting new services through linkage and convergence with other industries, integrated access and backhaul (IAB) that integrates and supports wireless backhaul links and access links to provide nodes for expanding network service areas, mobility enhancement including conditional handover and dual active protocol stack (DAPS) handover, and 2-step RACH for NR that simplifies random access procedures, and standardization of system architecture/service fields is also in progress for 5G baseline architecture (e.g., service based architecture, and service based interface) for combining network functions virtualization (NFV), software-defined networking (SDN) technology, mobile edge computing (MEC) that receives services based on a location of a UE, etc.

When such 5G mobile communication systems are commercialized, an explosive increase in connected devices will be connected to a communication network, so it is expected that improved functionality and performance of the 5G mobile communication systems and the integrated operation of the connected devices will be required. To this end, new researches are expected to be conducted on eXtended reality (XR) to efficiently support augmented reality (AR), virtual reality (VR), and mixed reality (MR), etc., improvement in 5G performance and reduction in complexity using artificial intelligence (AI) and machine learning (ML), AI service support, metaverse service support, drone communications, etc.

In addition, the development of these 5G mobile communication systems may serve as a basis for the development of not only multi-antenna transmission technology such as new waveform, full dimensional MIMO (FD-MIMO), array antenna, and large scale antenna to ensure coverage in the terahertz band of 6G mobile communication technology, high-dimensional spatial multiplexing technology using metamaterial-based lenses and antennas and orbital angular momentum (OAM) to improve the coverage of terahertz band signals, and reconfigurable intelligent surface (RIS) technology, but also full duplex technology for enhancing frequency efficiency and improving a system network of 6G mobile communication technology, AI-based communication technology that utilizes satellite and AI from the design stage and incorporates end-to-end AI support functions to realize system optimization, and next generation distributed computing technology that realizes services with complexity that exceeds the limits of UE computing capabilities by utilizing ultra-high-performance communication and computing resources, etc.

### [Disclosure]

### [Technical Problem]

The present disclosure is directed to providing a method and device for congestion reporting considering UE mobility in a wireless communication system.

Further, the present disclosure is directed to providing a method for an application server to predict a congestion situation by properly configuring a method for reporting a congestion situation even if a network function is modified for the congestion situation of the wireless communication system to satisfy user's perceived performance when ultra-high-speed and low-latency communications such as an eXtended reality (XR) service is performed in the wireless communication system.

In case that the ultra-high-speed and low-latency communications, such as the XR service, are performed in the wireless communication system, quality of service(QoS) policies and packet processing methods based on a protocol data unit (PDU) set that reflects characteristics of applications have emerged to satisfy the user's perceived performance. However, in order to acquire the information based on the PDU set in the wireless communication system, the wireless communication system should be able to recognize partial header (or extended header) or payload information of a protocol (for example, real-time transmission protocol (RTP)) that transmits media data so that the wireless communication system may classify and distinguish the PDU set. In this case, in case that importance of media information is included in a header of a data packet, the importance information is exposed as it is. Packets determined to be of high importance may become a target of attack by attackers. Accordingly, the present disclosure provides a method for hiding (protecting) importance information so that the importance information is not exposed. In addition, the present disclosure provides a method for enabling a UPF to correctly interpret meaning of information included in an RTP extended header.

### [Technical Solution]

According to an aspect of the present disclosure, a method performed by an application function (AF) in a wireless communication system includes transmitting a first message including information related to a congestion situation reporting method preferred by the AF to a network exposure function (NEF), receiving a second message including a response related to processing of the congestion situation reporting method from the NEF, in case that the congestion reporting method is not available, receiving a third message including information related to a modified congestion situation reporting method from the NEF and transmitting a fourth message to the NEF based on the third message.

According to another aspect of the present disclosure, a method performed by a session management function (SMF) in a wireless communication system includes receiving a first message including information related to a congestion situation reporting method preferred by the application function (AF) from a policy control function (PCF), transmitting a second message to the PCF based on the first message, determining whether the congestion situation reporting method preferred by the AF is not available, and in case that the congestion situation reporting method is not available, transmitting a third message including information related to a modified congestion situation reporting method to a network function (NF) between the SMF and the AF.

According to still another aspect of the present disclosure, an application function (AF) of a wireless communication system includes a transceiver, and a controller, in which the controller is configured to transmit a first message including information related to a congestion situation reporting method preferred by the AF to a network exposure function (NEF), receive a second message including a response related to processing of the congestion situation reporting method from the NEF, in case that the congestion reporting method is not available, receive a third message including information related to a modified congestion situation reporting method from the NEF and transmit a fourth message to the NEF based on the third message.

According to still yet another aspect of the present disclosure, a session management function (SMF) of a wireless communication system includes a transceiver, and a controller, in which the controller is configured to receive a first message including information related to a congestion situation reporting method preferred by the application function (AF) from a policy control function (PCF), transmit a second message to the PCF based on the first message, determine whether the congestion situation reporting method preferred by the AF is not available, and in case that the congestion situation reporting method is not available, transmit a third message including information related to a modified congestion situation reporting method to a network function (NF) between the SMF and the AF.

The technical problem to be achieved in the embodiment of the present disclosure are not limited to the above-described objects, and other objects that are not mentioned may be obviously understood by those having ordinary skill in the art to which the present disclosure pertains from the following description.

### [Advantageous Effect]

According to various embodiments of the present disclosure, it is possible to allow an application server to accurately predict a congestion situation by properly configuring a method for reporting a congestion situation even if a network function is modified for the congestion situation of the wireless communication system to satisfy user's perceived performance in case that ultra-high-speed low-latency communications such as an eXtended reality (XR) service are performed in the wireless communication system.

In addition, according to various embodiments of the present disclosure, it is possible to more safely transmit data by hiding importance information in a header of a data packet including characteristics of an application level in case that the ultra-high-speed and low-latency communication such as the XR service is performed in the wireless communication system.

### [Description of Drawings]

FIG. 1 is a diagram illustrating a structure of a wireless communication system according to an embodiment of the present disclosure.
FIG. 2 is a diagram illustrating a structure of a method for reporting a network congestion situation to an application server in a wireless communication system according to an embodiment of the present disclosure.
FIG. 3 is a flowchart illustrating a method for selecting a user plane function (UPF) according to a function supporting network congestion situation reporting in a wireless communication system according to an embodiment of the present disclosure.
FIG. 4 is a flowchart illustrating the method for selecting a UPF according to the function supporting the network congestion situation reporting in the wireless communication system according to an embodiment of the present disclosure.
FIG. 5 is a flowchart illustrating a method for maintaining or updating a method for reporting a network congestion situation in case that a UPF is changed in the wireless communication system according to an embodiment of the present disclosure.
FIGS. 6A and 6B are flowcharts illustrating the method for maintaining or updating the method for reporting a network congestion situation in case that the UPF is changed in the wireless communication system according to an embodiment of the present disclosure.
FIG. 7 is a flowchart illustrating a method for notifying an application server that the method for reporting a network congestion situation is updated in case that the UPF is changed in the wireless communication system according to an embodiment of the present disclosure.
FIG. 8 is a diagram illustrating an example of the structure of the wireless communication system according to an embodiment of the present disclosure.
FIG. 9 is a diagram illustrating an example of a method for transmitting data including application-level information in a wireless communication system according to an embodiment of the present disclosure.
FIG. 10 is a diagram illustrating a method for an application server to apply information for recognizing a PDU set in a wireless communication system to a network according to an embodiment of the present disclosure.
FIG. 11 is a diagram illustrating a method for processing application data in an application server and a UPF and a UE according to an embodiment of the present disclosure.
FIG. 12 is a diagram illustrating a structure of a base station according to an embodiment of the present disclosure.
FIG. 13 is a diagram illustrating a structure of a terminal according to an embodiment of the present disclosure.
FIG. 14 is a diagram illustrating a structure of a network entity performing a network function according to an embodiment of the present disclosure.

### [Mode for Disclosure]

Hereinafter, operation principles of the present disclosure will be described in detail with reference to the accompanying drawings. In case that it is determined that the detailed description of the known functions or configurations in describing the present disclosure below may obscure the gist of the present disclosure, the detailed description thereof will be omitted. Further, the following terminologies are defined in consideration of the functions in the present disclosure and may vary depending on the intention of users and operators, practice, etc. Therefore, the definitions thereof should be construed based on the contents throughout the specification.

For the same reason, some components in the accompanying drawings are omitted or schematically illustrated. In addition, the size of each component does not entirely reflect the actual size. The same reference numerals are assigned to the same or corresponding components in each drawing.

Various advantages and features of the present disclosure and methods accomplishing the same will become apparent from the following detailed description of example embodiments with reference to the accompanying drawings. However, the present disclosure may be modified in many different forms and it should not be limited to the exemplary embodiments set forth herein. Various embodiments are provided to make the present disclosure complete and to fully inform a person of ordinary skill in the art to which the present disclosure belongs the scope of the present disclosure, and the present disclosure is only defined by the scope of the claims. Throughout the specification, the same components will be denoted by the same reference numerals.

In this case, it will be appreciated that each block of a processing flowchart and combinations of the flowcharts may be executed by computer program instructions. Since these computer program instructions may be mounted in a processor of a general computer, a special computer, or other programmable data processing apparatuses, these computer program instructions executed through the processor of the computer or the other programmable data processing apparatuses create means performing functions described in a block(s) of the flow chart. Since these computer program instructions may also be stored in a computer usable or computer readable memory that may be directed to a computer or other programmable data processing apparatuses in order to implement the functions in a specific scheme, the computer program instructions stored in the computer usable or computer readable memory can also produce manufacturing articles including instruction means performing the functions described in the block(s) of the flowchart. Since the computer program instructions may also be mounted on the computer or the other programmable data processing apparatuses, the instructions performing a series of operation steps on the computer or the other programmable data processing apparatuses to create processes executed by the computer, thereby executing the computer or the other programmable data processing apparatuses may also provide steps for performing the functions described in a block(s) of the flowchart.

In addition, each block may indicate some of modules, segments, or codes including one or more executable instructions for executing a specific logical function(s). Further, it is to be noted that functions mentioned in the blocks occur regardless of an order in some alternative example embodiments. For example, two blocks that are continuously illustrated may be simultaneously performed in fact or be performed in a reverse sequence depending on corresponding functions.

The term 'unit' used in various embodiments of the present disclosure refers to a software or hardware component, and 'unit' performs certain roles. However, '~unit' is not limited to the software or the hardware. The '~unit' may be configured to be stored in a storage medium that may be addressed or may be configured to reproduce one or more processors. Accordingly, as an example, the '~unit' refers to components such as software components, object-oriented software components, class components, and task components, processes, functions, attributes, procedures, subroutines, segments of program code, drivers, firmware, microcode, circuits, data, databases, data structures, tables, arrays and variables. Components and functions provided within '~unit' may be combined into a smaller number of components and '~unit' or may be further separated into additional components and '~unit." In addition, components and '~units' may be implemented to reproduce one or more central processing units (CPUs) in a device or a security multimedia card. In addition, in various embodiments of the present disclosure, the '~unit' may include one or more processors.

In various embodiments of the present disclosure, a terminal may be referred to as user equipment (UE), a terminal, a mobile station (MS), a cellular phone, a smart phone, a computer, or various types of electronic devices capable of performing a communication function.

In addition, various embodiments of the present disclosure may be applied to other communication systems having similar technical backgrounds or channel forms to various embodiments of the present disclosure to be described below. In addition, various embodiments of the present disclosure may be applied to other communication systems through some changes without significantly departing from the scope of the present disclosure as determined by a person having skilled technical knowledge.

In describing in detail various embodiments of the present disclosure, the communication system may use various wired or wireless communication systems may be used. For example, 3GPP, which is a wireless communication standard standardization organization, may use new RAN (NR), which is a wireless access network on the 5G communication standard, and a packet core (5G system, or 5G core network, or next generation core (NG core)), which is a core network. In addition, the present disclosure can be applied to other communication systems having similar technical backgrounds with some changes within a scope that does not significantly deviate from the scope of the present disclosure, which may be possible at the judgment of a person having skilled technical knowledge in the technical field of the present disclosure.

Hereinafter, terms for identifying connection nodes, terms referring to network entities, terms referring to messages, terms referring to interfaces between network functions (NFs), terms referring to various types of identification information, etc., which are used in various embodiments of the present disclosure, are exemplified for convenience of description. Accordingly, the present disclosure is not limited to terms to be described below in various embodiments of the present disclosure, and other terms referring to objects having equivalent technical meanings may be used.

In the 5G system, network slices are supported, and traffics for different network slices may be processed by different protocol data unit (PDU) sessions. A PDU session may mean an association between a data network providing a PDU connection service and a UE. The network slice may be understood as a technology that logically configures a network as a set of NFs to support various services with different characteristics, such as broadband communication services and mission critical services such as a massive IoT and V2X, and separates different network slices. Therefore, even if a communication failure occurs in a network slice, the communication of other network slices is not affected, so stable communication service can be provided. In various embodiments of the present disclosure, the "slice" may be used interchangeably as a term meaning the "network slice." In such a network environment, a UE may access a plurality of network slices in case that receiving various services. In addition, the NF is a software instance running on hardware, and may be implemented as a network element or as a virtualized function instantiated on an appropriate platform.

A mobile carrier may configure network slices and allocate network resources suitable for specific services on a per-network slice basis or per set of network slices. The network resources may represent NFs, logical resources provided by the NFs, wireless resources allocated by a base station, etc.

For example, the mobile carrier may configure network slice A to provide mobile broadband services, network slice B to provide vehicle communication services, and network slice C to provide extended reality (XR) services to be described later. In other words, in a 5G network, services may be efficiently provided to UEs through network slices specialized for characteristics of each service. In a 5G system, the network slice may be represented by single-network slice selection assistance information (S-NSSAI). The S-NSSAI may include a slice/service type (SST) value and a slice differentiator (SD) value. The SST may represent the characteristics of the services (e.g., enhanced mobile broadband (eMBB), IoT, ultra reliability low latency communication (URLLC), V2X, XR services, etc.) supported by the network slice. The SD may be a value used as an additional identifier for a specific service referred to as SST.

Services that require high data rate low latency (HDRLL) may be, for example, XR services, an augmented reality (AR) services, virtual reality (VR) services, or cloud gaming services. The VR services are services that provide virtual environments implemented by a computer device using a VR headset, etc. The AR services are services that may combine the virtual environments with the real world using location, geographic information, etc. The XR services are services that may combine the real environment and the virtual environment and provide users with tactile, auditory, and olfactory information to further enhance a user's perceived level.

In various embodiments of the present disclosure, in transferring information based on UE mobility to applications, the XR services will be described as an example. However, various embodiments of the present disclosure may be applied not only to the XR services but also to various data services such as metaverse services. Therefore, it should be noted that various embodiments of the present disclosure are not limited to the XR services.

According to various embodiments of the present disclosure, in order to provide various types of XR service data such as audio, video, and haptic to users, packets related to the application data unit (ADU) of the applications need to be transmitted to the UEs according to the characteristics of the applications. Here, in case that the transmission of packets related to one ADU is not performed properly or the transmission of the set number (or ratio) of packets fails, even if the packets related to the ADU are transmitted to the UEs, there may be cases where the ADU information is not transferred to users. In this case, in case that the packets that do not provide the ADU information to the users are not transmitted through the communication network even if the packets are transmitted to the UEs, resources for transmitting unnecessary packets are saved, which may help the performance of the communication network.

The traffics of the applications for serving users may be generated as the ADUs according to the characteristics of the corresponding media, and packets for transmitting the ADUs may be transmitted through the communication network. The ADUs may have a correlation based on the characteristics of the media. For example, one ADU may be an ADU with high importance that includes information essential to users, and another ADU may not be provided to users without the ADU with high importance even if packets related to other ADUs are transmitted to the UEs. In this way, the relationship and importance with different ADUs may be determined according to the ADU. For example, in case that packets of a first ADU are transmitted, packets of a second ADU that have a lower importance and higher relationship than the first ADU may be processed with a lower priority in scheduling and packet processing, or packets may be discarded in case that necessary. Processing packets using information at the application level as described above may improve the user's service experience by effectively using network resources.

Since the ADU may be viewed as a collection of media units (MUs) or packet data units (PDUs) in terms of a communication network, the ADU may be called a PDU set. In describing various embodiments of the present disclosure, the ADU, the MU, and the PDU set may be used interchangeably, but the ADU, the MU, and the PDU set may be basically understood as the same concept. However, the ADU or the MU may be used as units in application data transferred outside the communication network, and the PDU set may be used in case that the ADU is served within the communication network.

In case that the packets corresponding to the ADU are served within the communication network, the existing packet-level QoS processing may be used as a basis, and application-level QoS processing may be additionally applied as needed. In addition, the application-level QoS processing may be performed within the communication network. For example, in the case of the downlink data, some information may be included in a general packet radio service (GPRS) tunneling protocol (GTP) header of the packet according to the ADU features in a PDU session anchor (PSA) user plane function (UPF) of the communication network. The information included in the GTP header may be used for the application-level QoS processing within the communication network (e.g., UPF or radio access network (RAN)). For uplink data, in case that the UE transmits information on the packet to the RAN according to the ADU features, the RAN may include some of the information in the GTP header. The information included in the GTP header may be used for the application-level QoS processing within the communication network (e.g., UPF, RAN, etc.).

Hereinafter, various exemplary embodiments in the present disclosure will be described in detail with reference to the drawings.

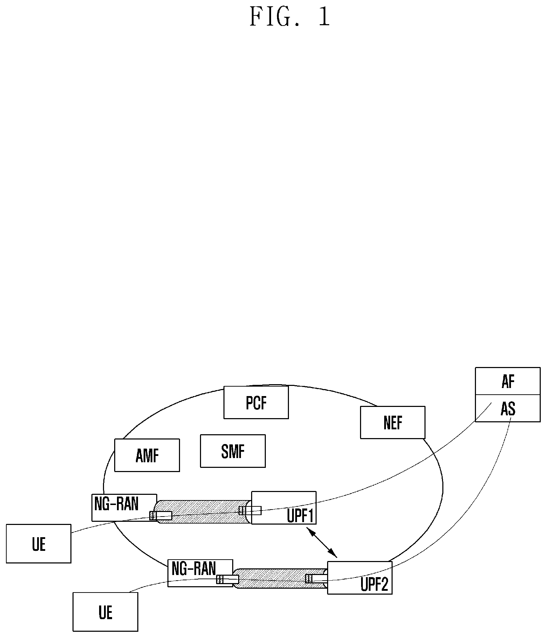

FIG. 1 is a diagram illustrating a structure of a wireless communication system according to an embodiment of the present disclosure.

Referring to FIG. 1, the wireless communication system may have a network structure indicating a transmission path of application data from a UE (terminal) to an application server. For example, the transmission path of the application data is a path in which data is transmitted from the UE to an application server (AS) through a user plane function (UPF) via a next generation-radio access network (NG-RAN). In addition, in the case of a PDU session which is session and service continuity (SSC) mode 2 or SSC mode 3 according to the UE mobility, the modification in the network configuration, etc., the UPF may be changed while replacing the PDU session, and the application service may be continuously received through a new PDU session.

The network technology used in various embodiments of the present disclosure may refer to standard specifications (e.g., TS 23.501, TS 23.502, TS 23.503, etc.) defined by the International Telecommunication Union (ITU) or 3GPP. Each of the components included in the network structure of FIG. 1 may mean a physical entity, or may mean software performing an individual function or hardware combined with software. Hereinafter, the components included in the network structure of FIG. 1 will be referred to as NFs.

Interfaces known in a 5G core network (5GC) may be used between the NFs. The related description may refer to the standard specification (TS 23.501), and therefore, a detailed description thereof will be omitted.

The wireless communication system of FIG. 1 may include the NG-RAN and the 5GC. The NG-RAN may be a base station (e.g., gNB, integrated access and backhaul (IAB), etc.) supporting a radio access technology in a 5G system. The NG-RAN may provide XR service-related information and/or data, which is transferred from an application function (AF)/application server (AS) of an external network via the 5GC, to UEs including XR devices. In addition, the NG-RAN may provide the XR service-related information and/or data received from the UEs to the AF/AS.

An access and mobility management function (AMF) is an entity for managing UE access and mobility. The AMF may act as a UE-core network endpoint that connects the UE to other entities(s) of the 5GC via the NG-RAN. For example, the AMF may perform network functions such as registration, connection, reachability, mobility management, access confirmation, authorization, and mobility event creation of a UE.

The session management function (SMF) may perform a management function for the PDU session of the UE. For example, the SMF may perform session management functions through establishment, modification, and release of a session and maintenance of a tunnel between the UPF and the NG-RAN required for the establishment, modification, and release, Internet protocol (IP) address allocation and management functions of a UE, and network functions such as selection and control of a user plane, traffic processing control in the UPF, and charging data collection control.

The UPF may perform a function of processing user data (e.g., XR data) of a UE. The UPF may perform a function of processing the XR data so that the XR data generated by the UE may be transferred to the AF/AS or data received from the AF/AS may be transferred to the UE. For example, the UPF may perform network functions such as performing an anchor role between radio access technologies (RATs), providing a connection between the PDU session and the AF/AS, packet routing and forwarding, packet inspection, application of a user plane policy, creation of a traffic usage report, and buffering.

User data management (UDM) (not illustrated) may perform functions such as generating authorization information for 3GPP security, processing a user identifier (ID), managing a list of NFs supporting a UE, and managing subscription information. A unified data repository (UDR) (not illustrated) may perform the functions of storing and providing subscription information managed by the UDM, structured data for exposure, and application data associated with a network exposure function (NEF) or services.

The policy control function (PCF) may manage operator policy information for providing services in the 5G system. The UDR may store the subscription information of the UE, and provide the stored subscription information to the UDM. In addition, the UDR may store the operator policy information and provide the stored operator policy information to the PCF.

The network repository function (NRF) (not illustrated) may store the functions supported by each network function in the service-based architecture, and may be used to locate network function nodes with the desired function in case that certain network functions want to locate a specific network function. For example, in case that the AMF locates the SMF or the SMF locates the UPF, the AMF or SMF may request the NRF to locate the appropriate SMF or UPF.

The NEF may perform a function of transferring or receiving events occurring in the 5G system and supporting capabilities to or from the outside. For example, the NEF may perform functions such as a function of safely supplying the AF/AS information to the 5GC, a function of converting internal/external information, and a function of storing information received from other NFs in UDR and then redistributing the information.

The UE may access the NG-RAN and register with the 5G system. For example, the UE may access the NG-RAN and perform a UE registration procedure with the AMF. During the registration procedure, the AMF may determine network slices available to the UE accessing the NG-RAN and allocate the determined network slices to the UE. The UE may select the network slice and establish the PDU session for communication with the AF/AS. One PDU session may include one or more quality of service (QoS) flows, and each QoS flow may configure different QoS parameters to provide different transmission performance required for each application service.

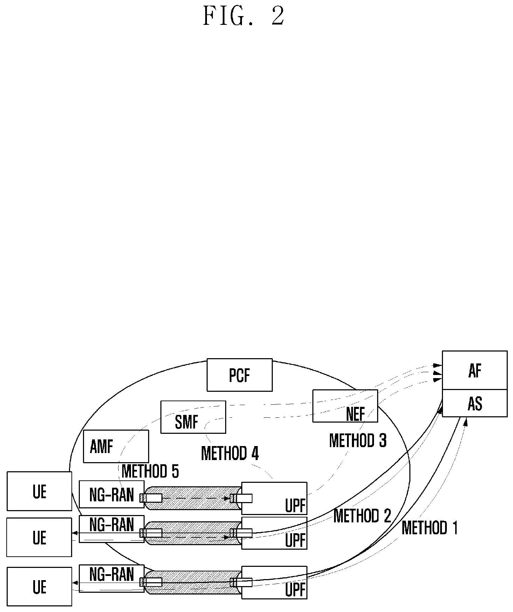

FIG. 2 is a diagram illustrating a structure of a method for reporting a network congestion situation to an application server in a wireless communication system according to an embodiment of the present disclosure.

Referring to FIG. 2, a congestion situation of a communication network for downlink data transmission may be reported to an application server (AF or AS) in the 5G network.

For example, in case that the NG-RAN determines that the communication network is congested for the downlink data transmission, the NG-RAN marks congestion experience (CE) in an early congestion notification (ECN) field of an internet protocol (IP) header of a downlink packet according to the congestion situation and transmits the marked congestion experience to a UE. In case that the UE transmits a packet to the application server (AS) in consideration of the received CE information, the UE may notify the application server of the congestion situation using, for example, an ECN echo flag in the packet. The application server estimates the congestion of the communication network using the received information on the congestion situation. The application server may use a method for adjusting a downlink data transmission speed or encoding downlink data by referring to the estimated congestion of the communication network. (The above method is defined as Method 1 in an embodiment of the present disclosure.)

In another method, in case that the NG-RAN determines that the communication network is congested for the downlink data transmission, the NG-RAN notifies the UPF of the congestion situation of the communication network through a GPRS tunneling protocol - user plane (GTP-U) header of the uplink data. The UPF marks the CE in the ECN field of the IP header of the downlink packet according to the congestion situation and transmits the marked IP packet to the UE through the NG-RAN. In case that the UE transmits a packet to the application server (AS) in consideration of the received CE information, the UE notifies the application server of the congestion situation using, for example, the ECN echo flag in the packet. The application server estimates the congestion of the communication network using the received information on the congestion situation. The application server may use the method for adjusting a downlink data transmission speed or encoding downlink data by referring to the estimated congestion of the communication network. (The above method is defined as Method 2 in an embodiment of the present disclosure.)

The above methods 1 and 2 are methods for communication network congestion reporting to an application server (AS) through an ECN or low latency, low loss, scalable throughput (L4S) method using a user plane.

Meanwhile, in another method, in case that the NG-RAN determines that the communication network is congested for the downlink data transmission, the NG-RAN may notify the UPF of the congestion situation of the communication network through the GTP-U header of the uplink data. The UPF transfers the received congestion information to the application server (AF). In this case, the UPF may also directly transmit a notification message including congestion information to the AF. Alternatively, the UPF may transmit a notification message including congestion information to the NEF, the NEF may transmit the notification message including the congestion information to the application server (AF), and the application server (AS) may use the method for adjusting a downlink data transmission speed or encoding downlink data by referring to the congestion of the received communication network. (The above method is defined as Method 3 in an embodiment of the present disclosure.)

In another method, in case that the NG-RAN determines that the communication network is congested for the downlink data transmission, the NG-RAN may notify the UPF of the congestion situation of the communication network through the GTP-U header of the uplink data. The UPF transmits the notification message including the received congestion information to the SMF, and the SMF transmits the notification message including the congestion information to the application server (AF) through the NEF or directly. In this case, the SMF may also transmit the notification message including the congestion information directly to the AF. Alternatively, the SMF may transmit the notification message including the congestion information to the NEF, the NEF may transmit the notification message including the congestion information to the application server (AF), and the application server (AS) may use the method for adjusting a downlink data transmission speed or encoding downlink data by referring to the congestion of the received communication network. (The method is defined as Method 4 in an embodiment of the present disclosure.)

In another method, in case that the NG-RAN determines that the communication network is congested for the downlink data transmission, the NG-RAN may transfer the notification message including the congestion information to the SMF through the AMF. The SMF transmits the notification message including the congestion information to the application server (AF) through the NEF or directly. In this case, the SMF may also transmit the notification message including the congestion information directly to the AF. Alternatively, the SMF may transmit the notification message including the congestion information to the NEF, the NEF may transmit the notification message including the congestion information to the application server (AF), and the application server (AS) may use the method for adjusting a downlink data transmission speed or encoding downlink data by referring to the congestion of the received communication network. (The above method is defined as Method 5 in an embodiment of the present disclosure.)

The above Methods 3, 4, and 5 are methods for communication network congestion reporting to an application server (AF) using a control plane.

As the method for communication network congestion reporting, only the method for congestion reporting in a downlink direction has been described, but the method for congestion reporting in an uplink direction to a UE uses the same method as the method described above (i.e., replacing the information on the downlink with the information on the uplink in the methods 1 to 5).

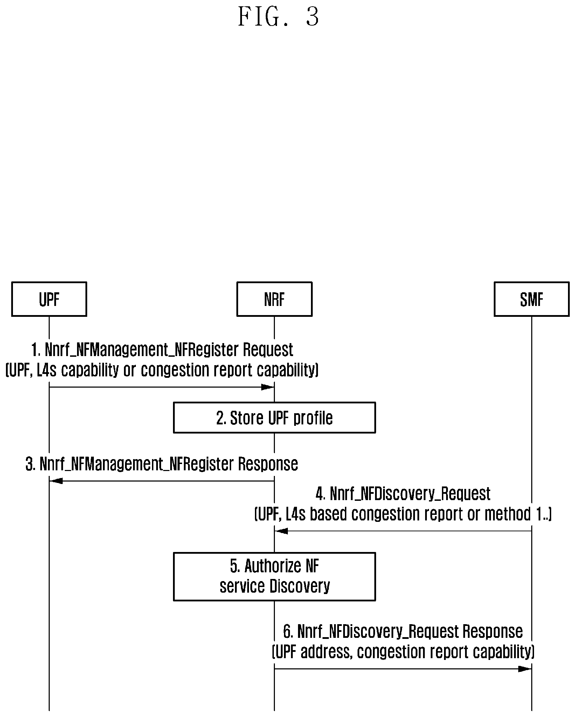

FIG. 3 is a flowchart illustrating the method for selecting a UPF according to the function supporting the network congestion situation reporting in the wireless communication system according to an embodiment of the present disclosure.

Referring to FIG. 3, an SMF 310 may determine a method for reporting a network congestion situation according to which method for reporting a network congestion situation the NG-RAN and a UPF 300 may use and which reporting method the application server (AF or AS) prefers or supports.

To this end, the SMF 310 may know the method for reporting a network congestion situation supported by each UPF and use the method for reporting a network congestion situation in case that selecting the UPF 300. To this end, the UPF 300 registers the method for reporting a network congestion situation that the UPF 300 supports in a profile of a UPF managed by an NRF 305 so that the SMF 310 may use the method for reporting a network congestion situation in case that locating the UPF 300 through the NRF 305.

In operation 320, the UPF 300 may register its capability in the NRF 305. In this case, the UPF 300 transmits an Nnrf_NFManagement_NFRegister request message to the NRF 305, including a congestion report capability indicating which method for reporting a congestion situation the UPF 300 can support, an L4S capability indicating a user plane-based reporting method using an ECN, an API-based congestion report capability indicating a control plane-based reporting method using an application programming interface (API), etc. In operation 325, the NRF 305 stores the method for reporting a network congestion situation supported by the UPF 300 in the UPF profile based on the information received from the UPF 300. In operation 330, the NRF 305 transmits a response message to the request of operation 320 to the UPF 300. For example, the NRF 305 may transmit an Nnrf_NFManagement_NFRegister response message to the UPF 300. The response message may include the registration result for the capability of the UPF 300.

Meanwhile, in operation 335, the SMF 310 may notify the NRF 305 that the SMF 310 wants to select the UPF through an Nnrf_NFDiscovery_Request message in case that selecting the UPF. In this case, the SMF 310 may include particularly desired information (e.g., data network name (DNN) or S-NSSAI or preferred method for reporting a congestion situation (e.g., L4S based congestion report or API-based congestion report or Method 1, Method 2, Method 3, Method 4, or Method 5)) in the request message.

Meanwhile, the NRF 305 that has received the request performs authorization for the request (operation 340). In addition, the NRF 305 may perform a discovery operation to determine the UPF for services. After performing the authorization operation, the NRF 305 may transmit a response message including information on an appropriate UPF for the request to the SMF 310 in operation 345. The response message may be an Nnrf_NFDiscovery_Request Response message. The information on the UPF may include address information or a fully qualified domain name (FQDN) of the UPF. In addition, the response message may include the method for reporting a congestion situation supported by each UPF.

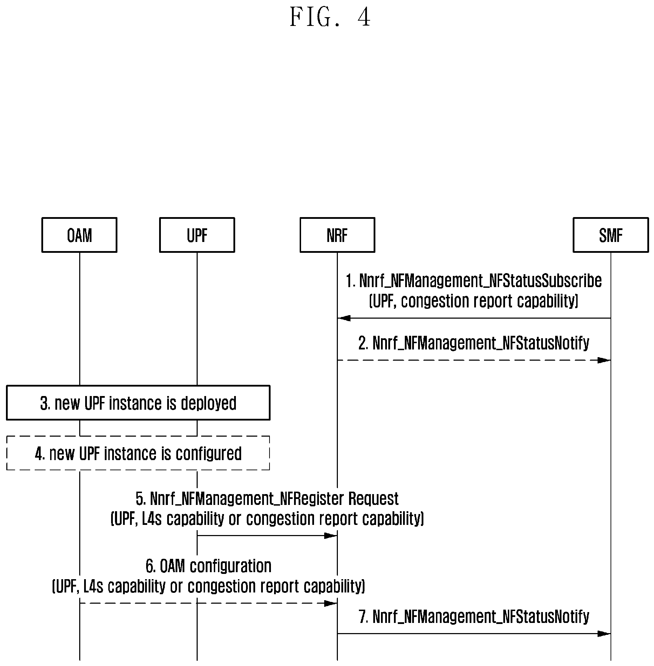

FIG. 4 is a flowchart illustrating the method for selecting a UPF according to the function of supporting the network congestion situation reporting in the wireless communication system according to an embodiment of the present disclosure.

Referring to FIG. 4, an SMF 410 may determine a method for reporting a network congestion situation according to which method for reporting a network congestion situation the NG-RAN and a UPF 400 may use and which reporting method the application server (AF or AS) prefers or supports.

To this end, the SMF 410 may know the method for reporting a network congestion situation supported by each UPF and use the method for reporting a network congestion situation in case that selecting the UPF. To this end, in operation 420, the SMF 410 transmits a message for a subscription request to the NRF 405 to notify in case that an initial subscription request is made for the method for reporting a network congestion situation supported for the available UPFs or in case that there is a modification in the supported method for reporting a network congestion situation. The subscription request message may be an Nnrf_NFManagement_NFStatusSubscribe message. The above subscription request message may include the information on the UPF and the congestion report capability information. In operation 425, the NRF 405 may notify the SMF about the method for reporting a network congestion situation supported by the UPF 400. For example, the NRF 405 may transmit an Nnrf_NFManagement_NFStatusnotify message to the SMF 410, and the Nnrf_NFManagement_NFStatusnotify message may include information on the method for reporting a network congestion situation supported by the UPF 400.

If a new UPF instance is deployed as in operation 430, the UPF 400 registers the method for reporting a network congestion situation supported by itself in the profile of the UPF managed by the NRF 405 as in operation 440.

That is, in operation 440, the UPF 400 may register its capability in the NRF. In this case, the UPF 400 may transmit the Nnrf_NFManagement_NFRegister request message to the NRF 405, including the congestion report capability indicating which method for reporting a congestion situation the UPF 300 can support, the L4S capability indicating the user plane-based reporting method using the ECN, the API-based congestion report capability indicating the control plane-based reporting method using the API, etc. The NRF 405 stores the method for reporting a network congestion situation supported by the UPF 400 in the UPF profile based on the received information. Thereafter, in operation 450, the NRF 405 notifies the SMF 410 of the modified information through the Nnrf_NFManagment_NFStatusnotify message (notification message). Therefore, the notification message includes the method for reporting a network congestion situation supported for the available UPF.

In case that a new UPF instance is configured through an OAM 415 as in operation 435, the NRF 405 receives an OAM configuration and stores the supported method for reporting a network congestion situation in the UPF profile in operation 445. The OAM configuration may include the information on the UPF 400, the L4s capability, or the congestion report capability. In case that receiving the OAM configuration in operation 445, the NRF 405 may identify information related to the changed UPF 400. Accordingly, in operation 450, the NRF 405 notifies the SMF 410 of the modified information through the Nnrf_NFManagment_NFStatusnotify message (notification message). The notification message includes the method for reporting a network congestion situation supported for the available UPF.

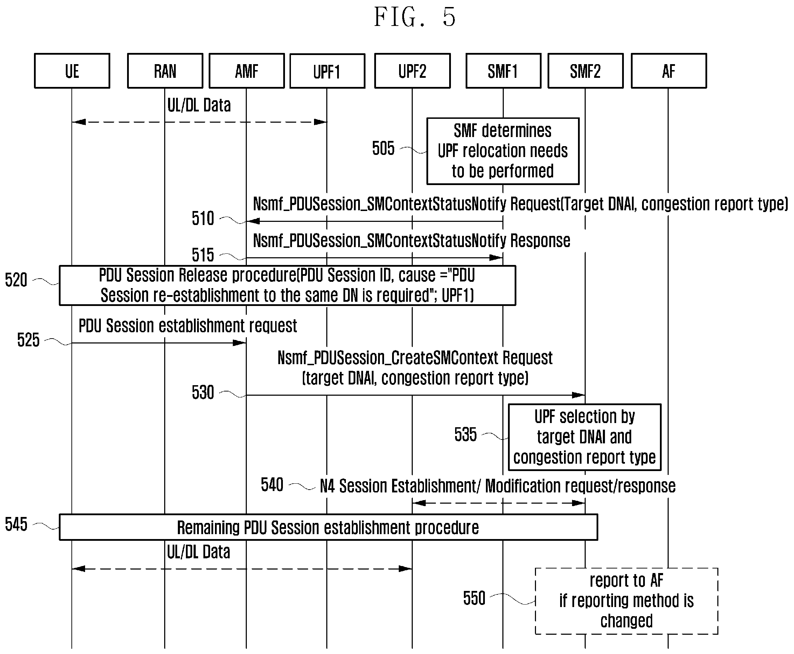

FIG. 5 is a flowchart illustrating the method for maintaining or updating the method for reporting a network congestion situation in case that the UPF is changed in the wireless communication system according to an embodiment of the present disclosure.

Referring to FIG. 5, especially for a PDU session served by SSC mode2, in case that the SMF recognizes that the UPF needs to be changed, the method and procedure for maintaining the existing method for reporting a network congestion situation even if the UPF is changed or the SMF is changed are described. To this end, a method for preventing the method for reporting a network congestion situation used in the communication network from being modified so as not to affect an application server and a user's perceived service during a process of deleting the existing PDU session and replacing the existing PDU session with a new PDU session will be described.

In case that the PDU session served by the SSC mode2 is being served using the SMF1 and UPF1, an SMF1 may determine that the serving UPF needs to be changed (relocation), as in operation 505. For example, in case that the SMF1 recognizes that the location of the UE is changed to a different domain name access identifier (DNAI) and that the existing UPF1 may no longer provide service, the UPF may be determined to need to be changed.

In operation 510, the SMF1 may transmit an Nsmf SMF_PDUSession_SMcontextStatusnotify request message (notification message) to the AMF. The Nsmf SMF_PDUSession_SMcontextStatusnotify request message may include a target DNAI and include a method for network congestion reporting used in the current PDU session, or may include a method for network congestion reporting used for a QoS flow of the current PDU session along with a QoS flow ID (QFI). In addition, the notification message may include an indicator indicating that the SMF (re)selection is required. In operation 515, the AMF may transmit a response message to the SMF1. The response message may be an Nsmf SMF _PDUSession_SMcontextStatusnotify response message.

In operation 520, the SMF1 may perform a PDU session release process. In this case, the SMF1 may transmit a PDU session release command message to the UE, including a cause value indicating "PDU session re-establishment to the same DN is required" for the corresponding PDU session ID.

The UE, which has received the cause value, transmits a PDU session establishment request message to create a new PDU session (operation 525). Since the AMF has stored that the UE is in the target DNAI through operations 510 and 515, in case that there is an indication that the SMF (re)selection is required, the AMF performs an operation of re-selecting the SMF based on the target DNAI. In this case, as in operation 530, the AMF transmits an Nsmf SMF_PDUSession_CreateSMContext request message to a newly selected SMF2. The Nsmf SMF_PDUSession_CreateSMContext request message may include the PDU session establishment request message transmitted by the UE and the target DNAI. In addition, the Nsmf SMF_PDUSession_CreateSMContext request message may include the method for network congestion reporting used in an old PDU session that is transferred to the AMF through the operation 510 or the method for network congestion reporting used for the QoS flow of the old PDU session along with the QoS flow ID (QFI).

In operation 535, the SMF2 identifies the method for network congestion reporting to be used based on the received target DNAI information and the method for network congestion reporting, and selects an appropriate UPF using the NRF, etc. The method of selecting the UPF follows the methods of FIGS. 3 and 4. For example, in case that multiple QoS flows use different methods for network congestion reporting, the SMF2 selects the UPF that can support all the methods for network congestion reporting. In addition, in operation 540, the SMF2 performs an N4 session establishment process or an N4 session modification process for a newly selected UPF2, and in operation 545, performs the remaining PDU session establishment process. Thereafter, the PDU session is served to the UE through the UPF2, and the SMF2 uses the same SSC mode2 and the selected method for network congestion reporting. The selection of the method for network congestion reporting is determined by considering the method for network congestion reporting supported by the NG-RAN, the existing method for network congestion reporting, etc., and basically, in case that the existing method for network congestion reporting is available, the same method for network congestion reporting as before is used.

On the other hand, in case that there is no indication that the SMF (re)selection is required in operation 510, the AMF may use the SMF that has managed the existing old PDU session without having to perform the SMF selection separately. In other words, the SMF2 may become the same NF as the SMF1.

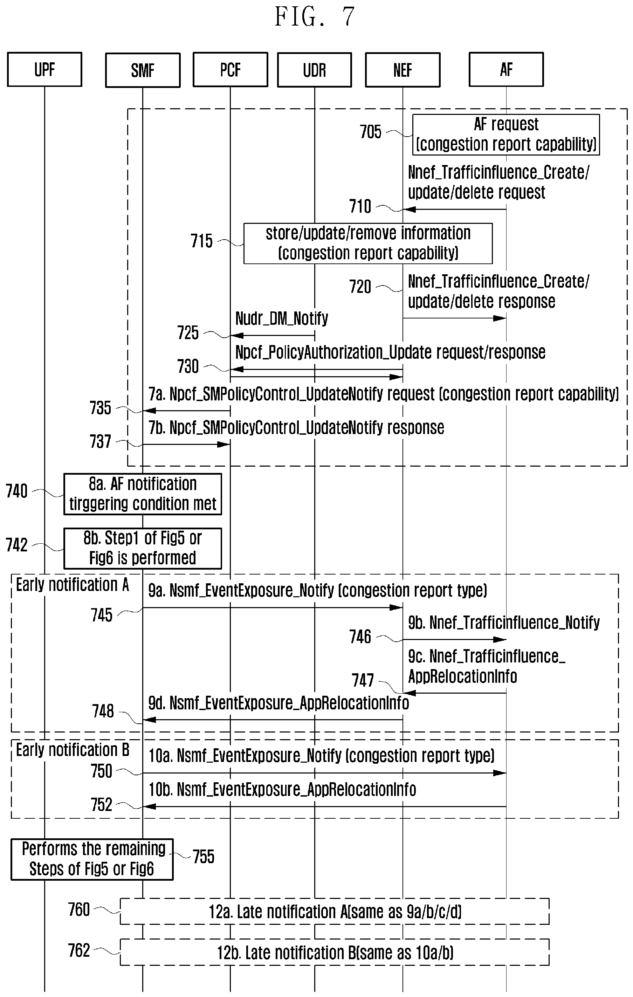

Meanwhile, in case that the method for network congestion reporting is modified as in operation 550, the SMF notifies the application function (AF) of the modified method for network congestion reporting, and even in case that the method for network congestion reporting is not modified, the SMF may also notify the AF of the method for network congestion reporting to be used. The method for setting the method for network congestion reporting between the SMF and the AF as in operation 550 follows the process of FIG. 7.

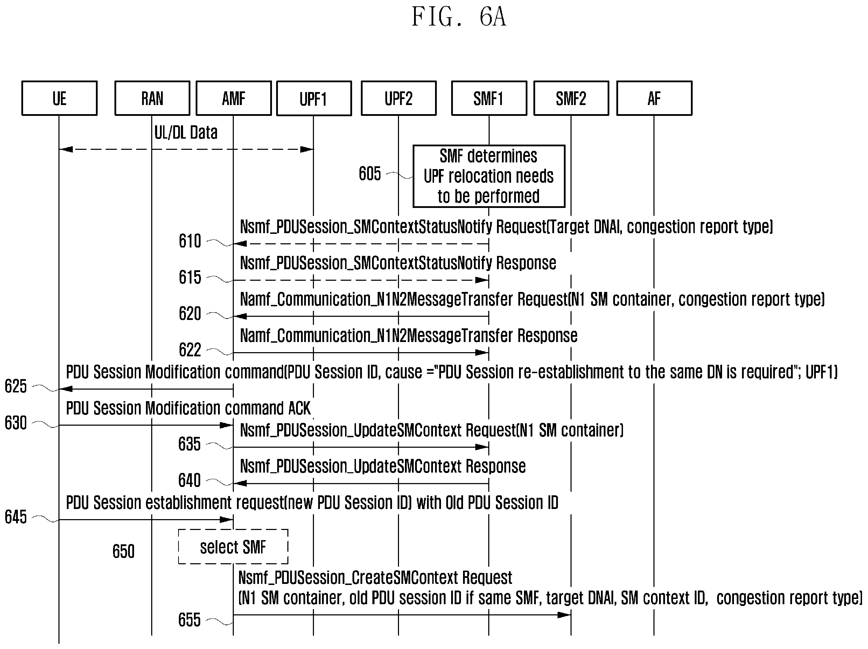

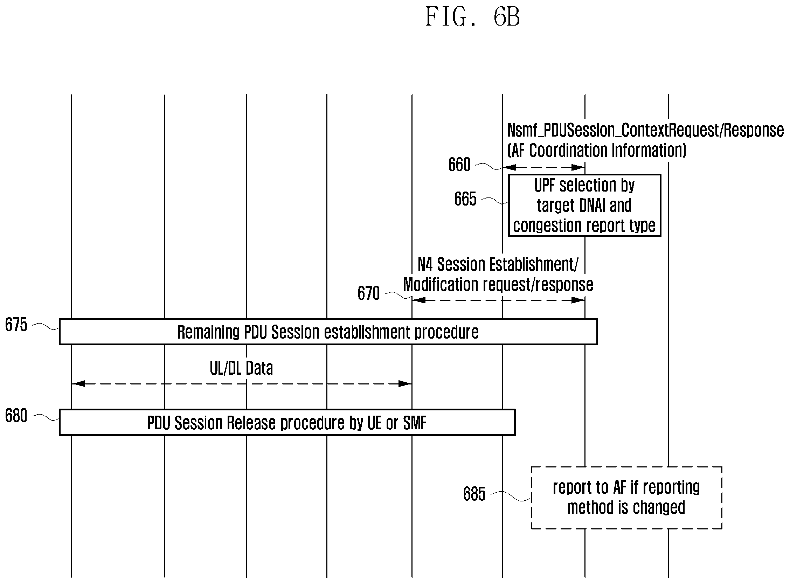

FIGS. 6A and 6B are flowcharts illustrating the method for maintaining or updating the method for reporting a network congestion situation in case that the UPF is changed in the wireless communication system according to an embodiment of the present disclosure. For convenience of description, FIGS. 6A and 6B are referred to as FIG. 6.

Referring to FIG. 6, especially for a PDU session served by SSC mode3, in case that the SMF recognizes that the UPF needs to be changed, the method and procedure for maintaining the existing method for reporting a network congestion situation even if the UPF is changed or the SMF is changed are described. To this end, the method for preventing the method for reporting a network congestion situation used in the communication network from being modified so as not to affect the application server and the user's perceived service during the process of deleting the existing PDU session and replacing the existing PDU session with the new PDU session will be described.

In case that the PDU session served by the SSC mode3 is being served using the SMF 1 and UPF 1, an SMF1 may determine that the serving UPF needs to be changed, as in operation 605. For example, in case that the SMF1 recognizes that the location of the UE is changed to a different domain name access identifier (DNAI) and that the existing UPF1 may no longer provide service, the UPF may be determined to need to be changed. Alternatively, in case that the SMF receives an indication for the possibility of modification in the application function (AF) from the PCF, it may determine that the UPF needs to be modified without changing the SMF.

In this case, the SMF1 may transmit the Nsmf SMF_PDUsession_SMcontextStatusnotify request message to the AMF as in operation 610. The Nsmf SMF_PDUSession_SMcontextStatusnotify request message may include the target DNAI and include the method for network congestion reporting used in the current PDU session, or may include the method for network congestion reporting used for the QoS flow of the current PDU session along with the QoS flow ID (QFI). In addition, the Nsmf_PDUSession_SMcontextStatusNotify request message may include the indicator indicating that the SMF (re)selection is required. In operation 615, the AMF may transmit the response message to the SMF1. The response message may be the Nsmf SMF_PDUSession_SMcontextStatusnotify response message.

Meanwhile, the SMF1 may transmit an Namf_Communication _N1N2MessageTransferrequest message to the AMF by putting a PDU session modification command into an N1 SM container in operation 620. In this case, the SMF may transmit a PDU session modification command message to the UE, including a cause value indicating "PDU session re-establishment to the same DN is required" for the corresponding PDU session ID. In addition, the Namf_Communication_N1N2MessageTransfer message may include the method for network congestion reporting used in the current PDU session, or may include the method for network congestion reporting used for the QoS flow of the current PDU session along with the QoS flow ID (QFI). In addition, the Namf_Communication_N1N2MessageTransfer message may include the indicator indicating that the SMF (re)selection is required. In operation 622, the AMF that has received the message may transmit the response message to the SMF1. The response message may be an Namf_Communication _N1N2MessageTransferresponse message.

The AMF forwards the received PDU session modification command message to the UE in operation 625, and the UE performs ACK for the PDU session modification command through the AMF along with the SMF1 in operation 630/operation 635/operation 640. In operation 630, a PDU session modification command ACK message is transmitted from the UE to the AMF, and in operation 635, an Nsmf_PDUSession_UpdateSMContext Request message may be transmitted from the AMF to the SMF1. The Nsmf_PDUSession_UpdateSMContext Request message may include an N1 SM container. In operation 640, the SMF1 may transmit an Nsmf_PDUSession_UpdateSMContext Response message to the AMF.

Meanwhile, the UE, which has received the cause value in operation 625, transmits, to the AMF, a new PDU session ID by including the new PDU session ID in the PDU session establishment request message to create a new PDU session, as in operation 645, and also transmits, to the AMF, an old PDU session ID by including the old PDU session ID in the PDU session establishment request message.

In case that the UE indicates that the SMF (re)selection is required through operation 610, operation 615, or operation 620, the AMF reselects the SMF, as in operation 650. However, in case that there is no indication that the SMF (re)selection is required or there is an indication that the SMF reselection is unnecessary, the new PDU session is created through the same SMF as the SMF that serves the old PDU session.

As in operation 655, the AMF transmits an Nsmf_PDUSession_CreateSMContext request message to the newly selected SMF2 or the existing SMF1. The Nsmf_PDUSession_CreateSMContext request message may include the PDU session establishment request message transmitted by the UE, and may also include the old PDU session ID in case that using the existing SMF 1, the target DNAI, the SM context ID received from the SMF1 through the operation 610 or 620, and the method for network congestion reporting used in the old PDU session transmitted to the AMF through the operation 610 or 620 or the method for network congestion reporting used for the QoS flow of the old PDU session along with the QoS flow ID (QFI).

In operation 660, the newly selected SMF2 may receive AF coordination information from the SMF1, which is the old the SMF, using the information included in the SM context ID.

Meanwhile, in operation 665, the newly selected SMF2 or the existing SMF1 identifies the method for network congestion reporting to be used based on the received target DNAI information and the method for network congestion reporting, and selects an appropriate UPF using the NRF, etc. The method of selecting a UPF follows the methods of FIGS. 3 and 4. For example, in case that multiple QoS flows use different methods for network congestion reporting, the UPF that can support all the methods for network congestion reporting is selected. In addition, the N4 session establishment process or the N4 session modification process is performed for the newly selected UPF2 (operation 670), and the remaining PDU session establishment process is performed as in operation 675. Thereafter, the PDU session is served to the UE through the UPF2, and the SMF uses the same SSC mode3 and the selected method for network congestion reporting. The selection of the network congestion report method is determined by considering the network congestion report method supported by the NG-RAN, the existing network congestion report method, etc., and basically, in case that the existing network congestion report method is available, the same method for network congestion reporting as before is used.

As in operation 680, the UE or the SMF triggers and performs the PDU session release process for the old PDU session.

Meanwhile, in case that the method for network congestion reporting is modified as in operation 685, the SMF may notify the application function (AF) of the modified method, and even in case that the method for network congestion reporting is not modified, the SMF may notify the AF of the method for network congestion reporting to be used. The method for setting the method for network congestion reporting between the SMF and the AF as in operation 685 follows the process of FIG. 7.

FIG. 7 is a flowchart illustrating a method for notifying an application server that the method for reporting a network congestion situation is updated in case that the UPF is changed in the wireless communication system according to an embodiment of the present disclosure.

Referring to FIG. 7, operations 705 to 737 are procedures for applying a policy by providing the method for reporting a network congestion situation that the AF desires or can support to the communication network. In addition, for early notification, the method and procedure for notifying an AF in case that the method for reporting a network congestion situation is determined or updated in operation 740 and operation 742 are performed through operations 745/746/747/748 or operations 750/752, or for late notification, performed through operation 760 or 762.

First, the procedure for providing the communication network with the method for reporting a network congestion situation that the AF wants or can support and applying the method for reporting a network congestion situation to the policy determines the method for reporting a network congestion situation that the AF prefers in operation 705 or determines the method for reporting a network congestion situation that can be supported, and transmits the determined method for reporting a network congestion situation to the NEF through an Nnef_Trafficinfluence_Create request, Nnef_Trafficinfluence _Update request, or an Nnef_Trafficinfluence_Delete request message in operation 710. Accordingly, the NEF, which has received the method for reporting a network congestion situation that the AF prefers or the method for reporting a network congestion situation that can be supported, stores, updates, or deletes information corresponding to an S-NSSAI and a DNN or a subscription permanent identifier (SUPI) or a generic public subscription identifier (GPSI) for serving the AF in the UDR as in operation 715. In operation 720, the NEF may provide the AF with the processing result of the NEF through the Nnef_Trafficinfluence_Create response or Nnef_Trafficinfluence _Update response or Nnef_Trafficinfluence_Delete response message. In the case of the PCF that has set up the event subscription for the modification in the UDR information, a PCC rule is updated through an Nudr_DM_Notify message as in operation 725. Alternatively, the NEF that has received the information of the operation 710 may update the PCC rule by transferring the preferred method for reporting a network congestion situation or the supportable method for reporting a network congestion situation to the designated PCF through the Npcf_PolicyAuthroization_Update process, as in operation 730. Accordingly, the modified preferred method for reporting a network congestion situation or the supportable method for reporting a network congestion situation may be transferred from the PCF to the SMF through the Npcf_SMPolicyControl_Updatenotify request message, as in operation 735. In operation 737, the SMF may transmit the response message to the PCF. The response message may be an Npcf_SMPolicyControl _UpdateNotify response message. Thereafter, the method for reporting a network congestion situation is configured in the communication network through the PDU session modification process or the subsequent PDU session establishment process such as transferring the information configured through the Npcf_SMPolicyControl_Updatenotify request message to the UPF. A detailed description thereof will be omitted.

Instead of an Nnef_Trafficinfluence_Create request/response or Nnef_Trafficinfluence_Update request/response or Nnef_Trafficinfluence_Delete request/response message in the above process, the AF may use the Nnef_AFsessionWithQoS_Create request/response or Nnef_AFsessionWithQoS_Update request/response or Nnef_AFsessionWithQoS _Delete request/response to transfer the preferred method for reporting a network congestion situation or the supportable method for reporting a network congestion situation.

Meanwhile, in operation 740, the SMF checks conditions under which the SMF should notify the AF.

For example, one of the following conditions may be a condition under which the SMF should notify the AF:
1. In case that the method for reporting a network congestion situation is first created or deleted according to the AF request while the PDU session is created.
2. In case that a method for reporting a network congestion situation is first created or deleted according to the AF request for the QoS flow of the PDU session.
3. In case that the SMF is requested by the AF to report the method for reporting a network congestion situation that is being used or available.
4. In case that the location of the UE, i.e., the DNAI is modified or the method for reporting a network congestion situation is modified.
5. In case that the method for reporting a network congestion situation is modified between the L4S-based congestion report and the API-based congestion reporting method.

Therefore, in the situations such as the first, second, or third conditions among the above conditions, the SMF transfers the method for reporting a network congestion situation that is being used or available to the AF through operation 745/operation 746/operation 747/operation 748 or operation 750/operation 752.

That is, the SMF transmits the method for reporting a network congestion situation that is being used or available to the NEF through the Nsmf_EventExposure _Notify message, as in operation 745, and the NEF transfers the above information to the AF through the Nnef_Trafficinfulence _Notify message.

Alternatively, the SMF transmits the method for reporting a network congestion situation that is being used or available to the AF through the Nsmf_EventExposure_Notify message, as in operation 750.

Alternatively, in the situations such as the fourth or fifth conditions among the above conditions, depending on the type of SSC mode, as in operation 742, in the case of the SSC mode 2, operation 505 of FIG. 5 may be performed, and in the case of the SSC mode 3, operation 605 of FIG. 6 may be performed.

Therefore, in the case where the early notification is applied (for example, in the case where the SMF receives a request from the AF to first obtain permission for the modification from the AF through operation 705 or operation 737), as early notification A method, the SMF transfers to the NEF the fact that the method for reporting a network congestion situation being used may be updated through the Nsmf_EventExposure_Notify message, as in operation 745 or operation 746, and the NEF transfers to the AF the fact that the method for reporting a network congestion situation may be updated through the Nnef_Trafficinfulence_Notify message. Meanwhile, the AF transfers to the NEF whether the AF permits the updating through an Nnef_Trafficinfulence_AppRelocationInfo message as in operation 747 and operation 748, and the NEF notifies the SMF whether the AF permits the updating through an Nsmf_EventExposure_AppRelocationInfo message. In case that permitted, the SMF performs the remaining processes of FIG. 5 or 6 as in operation 755.

Alternatively, as early notification B method, the SMF directly transfers to the AF the fact that the method for reporting a network congestion situation being used may be updated through Nsmf_EventExposure_Notify message as in operation 750, and the AF notifies the SMF whether the AF permits the updating through the Nsmf_EventExposure_AppRelocationInfo message through operation 752. In case that permitted, the SMF performs the remaining processes of FIG. 5 or 6 as in operation 755.

After the above operation 755 ends, the SMF may notify the AF of the final modified method for reporting a network congestion situation again through operation 760 or operation 762.

On the other hand, in case that the late notification is applied (e.g., in case that the SMF performs a modification without permission from the AF), as late notification A method, the SMF transfers the modified method for reporting a network congestion situation or the available method for reporting a network congestion situation in operation 755 to the NEF through the Nsmf_EventExposure_Notify message, as in operation 745 or 746, and the NEF transfers the modified method for reporting a network congestion situation or the available method for reporting a network congestion situation to the AF that is received through the Nnef_Trafficinfulence _Notify message.

Alternatively, as a late notification B method, the SMF directly transmits the modified method for reporting a network congestion situation or the available method for reporting a network congestion situation in operation 755 to the AF through the Nsmf_EventExposure_Notify message, as in operation 750.

In the above process, instead of the Nnef_Trafficinfulence_Notify message, Nnef_AFsessionWithQoS_Notify may be used.

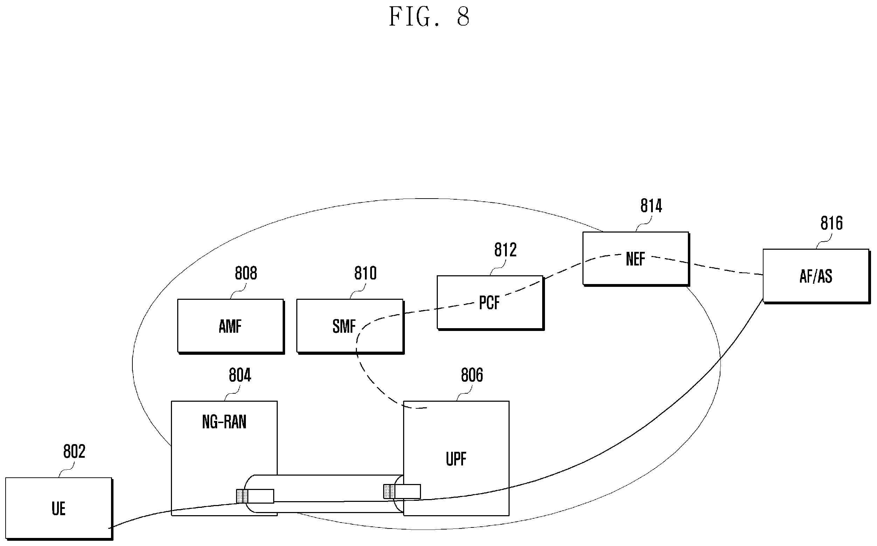

FIG. 8 illustrates an example of the structure of the wireless communication system according to an embodiment of the present disclosure.

Referring to FIG. 8, the wireless communication system may have a network structure representing a transmission path of application data. For example, the transmission path of the application data may be a transmission path through which XR data according to an XR service used by a user is transferred through the UE from an application server (AS) 816 via the use plane function (UPF) and the next generation-radio access network (NG-RAN) 804. In addition, in the wireless communication system, a path that provides information for recognizing the application data may use a path that transfers information from the application function (AF) to the UPF via the network exposure function (NEF), the policy control function (PCF), and the session management function (SMF).

The network technology used in various embodiments of the present disclosure may refer to standard specifications (e.g., TS 23.501, TS 23.502, TS 23.503, etc.) defined by the international telecommunication union (ITU) or 3GPP, and the components included in the network structure of FIG. 8 may each mean a physical entity, or mean software that performs an individual function, or hardware combined with the software. Hereinafter, the components included in the network structure of FIG. 8 will be referred to as NFs.

Interfaces known in a 5G core network (5GC) may be used between the NFs. The related description may refer to the standard specification (TS 23.501), and therefore, a detailed description thereof will be omitted.

The wireless communication system of FIG. 8 may include the NG-RAN 804 and the 5GC. The NG-RAN 804 may be a base station (e.g., gNB, integrated access and backhaul (IAB), etc.) supporting a radio access technology in the 5G system. The NG-RAN 804 may provide XR service-related information and/or data, which is transferred from an AF/AS 816 of an external network via the 5GC, to UEs including XR devices. In addition, the NG-RAN 804 may provide the XR service-related information and/or data received from the UEs to the AF/AS 816.

In the embodiments of the present disclosure below, a UE 802 may be connected to a plurality of XR devices in a wireless or wired manner, as in the example of FIG. 8, or may perform communication between the XR device and AS/AF through the 5G system, including the plurality of XR devices.

In FIG. 8, the 5GC may include network entities such as an AMF 808, an SMF 810, a UPF 806, a PCF 812, and a UDM (not illustrated).

The AMF 808 is an entity for managing access and mobility of the UE 802. The AMF 808 may act as a UE-core network endpoint that connects the UE 802 to other entity(s) of the 5GC via the NG-RAN 804. For example, the AMF 808 may perform network functions such as registration, connection, reachability, mobility management, access confirmation, authorization, and mobility event creation of a UE.

The SMF 810 may perform a management function for the PDU session of the UE 802. For example, the SMF 810 may perform session management functions through establishment, modification, and release of a session and maintenance of a tunnel between the UPF 806 and the NG-RAN 804 required for the establishment, modification, and release, Internet protocol (IP) address allocation and management functions of the UE, and network functions such as selection and control of a user plane, traffic processing control in the UPF 806, and charging data collection control.

The UPF 806 may perform a function of processing user data (e.g., XR data) of the UE 802. The UPF 806 may perform a function of processing the XR data so that the XR data generated by the UE 802 may be transferred to the AF/AS 816 or data received from the AF/AS 816 may be transferred to the UE 802. For example, the UPF 806 may perform network functions such as performing an anchor role between radio access technologies (RATs), providing a connection between the PDU session and the AF/AS 816, packet routing and forwarding, packet inspection, application of a user plane policy, creation of a traffic usage report, and buffering.

The UDM (not illustrated) may perform functions such as generating authorization information for 3GPP security, processing a user identifier (ID), managing a list of NFs supporting the UE 802, and managing subscription information. The UDR may perform the functions of storing and providing subscription information managed by the UDM, structured data for exposure, and application data associated with the NEF or services.

The PCF 812 may manage operator policy information for providing services in the 5G system. The UDR may store the subscription information of the UE 802, and provide the stored subscription information to the UDM. In addition, the UDR may store the operator policy information and provide the stored operator policy information to the PCF 812.

The NEF 814 may perform a function of transferring or receiving events occurring in the 5G system and supporting capabilities to or from the outside. For example, the NEF 814 may perform functions such as a function of safely supplying the information of the AF/AS 816 to the 5GC, a function of converting internal/external information, and a function of storing information received from other NFs in UDR and then redistributing the information.

The UE 802 may access the NG-RAN 804 and register with the 5G system. For example, the UE 802 may access the NG-RAN 804 and perform a UE registration procedure with the AMF 808. During the registration procedure, the AMF 808 may determine network slices available to the UE 802 accessing the NG-RAN 804 and allocate the determined network slices to the UE 802. The UE 802 may select the network slice and establish the PDU session for communication with the AF/AS 816. One PDU session may include one or more QoS flows, and each QoS flow may configure different QoS parameters to provide different transmission performance required for each application service.

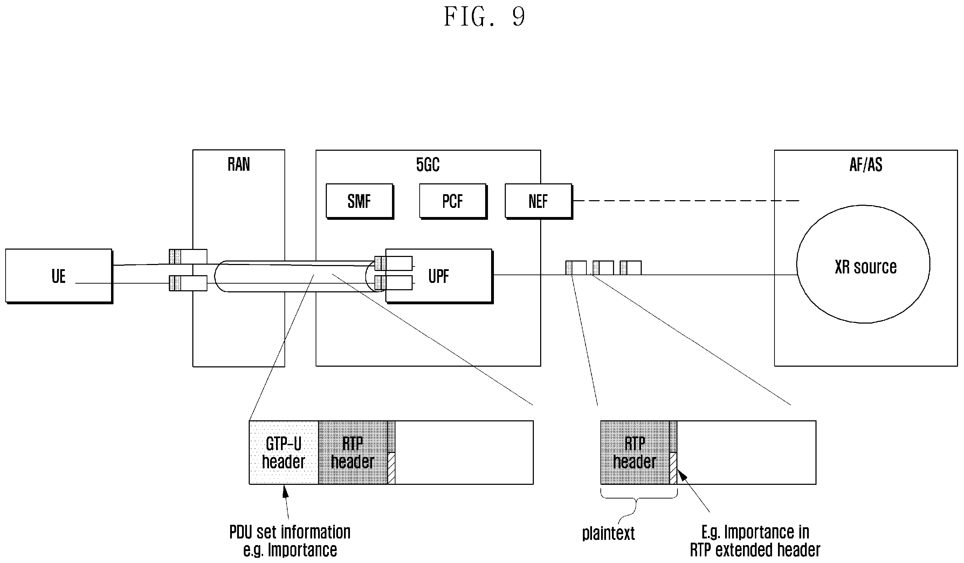

FIG. 9 illustrates an example of a method for transmitting data including application-level information in a wireless communication system according to an embodiment of the present disclosure.

Referring to the example of FIG. 9, a method for a UPF to find out application-level information and mark the application-level information in a GTP-U header while XR data generated from an AS is transmitted to a communication network as a real-time transport protocol (RTP) is described.

Referring to FIG. 9, a case where a user's UE uses an XR service is considered.

Data for the XR service may be composed of packets of units configured by the application and transmitted to the communication network. For example, the XR data may be transferred to a 5GC network through the RTP or a secured RTP (SRTP) protocol. The RTP packet transmitted by the AS may be encapsulated in an IP packet and transmitted through the communication network. The UPF may receive the IP packet and inspect the RTP packet included in the IP packet. In addition, the UPF may identify application (media) related information and find out information on a PDU set based on the inspection.

In this case, the same RTP packet header may include information for the UE to correctly receive the RTP packet. In addition, the information in the RTP packet header may be used to find out the application-level information on the XR data in the UPF of the 5GC network. In addition, in case that the application server generates an RTP packet, an RTP extended header may be added so that the RTP extended header may be used to find out the application-level information in the UPF.

For example, the RTP packet assumes that the XR data is encoded in a group of pictures (GOP) format, the application-level information has meaning for each frame (e.g., I-frame or P-frame or B-frame), in which each frame may be considered as a data burst or an ADU or PDU set, and in the 5G network, the data burst or the ADU or PDU set may be distinguished so that the PDUs in the same PDU set may be processed with the same criteria. To this end, the application server may include the sequence number of the data burst or ADU or PDU set in the extended header of each RTP packet, include information indicating the last PDU of the PDU set, include the PDU sequence number of the same PDU set, include information indicating the size of the PDU set, and/or include information indicating the importance of the PDU set.

In this case, a payload of the RTP packet may be encrypted and transferred, but the RTP header and the RTP extended header may be transferred (i.e., without being encrypted) in plaintext. Accordingly, the application-level information included in the RTP packet may be exposed. In particular, the information indicating the importance of the PDU set may be a primary target of an attacker in the case of a packet with high importance. In addition, the value included in the RTP extended header may have different meanings for each application. To this end, the method for a UPF to interpret meaning of a value in an RTP extended header may be different.

In the present disclosure, a method for hiding information in a packet with high importance as described above and a method for a UPF to correctly interpret meaning of a value in an RTP extended header are proposed.

Meanwhile, the UPF, which has acquired the information on the PDU set for the RTP packet, transmits the information on the PDU set to the NG-RAN by including the information on the PDU set in the GTP-U header (i.e., the UPF encapsulates the information on the PDU set in GTP-U together with the IP packet received from the AS and transmits the encapsulated information on the PDU set to the NG-RAN), and the NG-RAN may be used to schedule PDUs based on the received information on the PDU set.

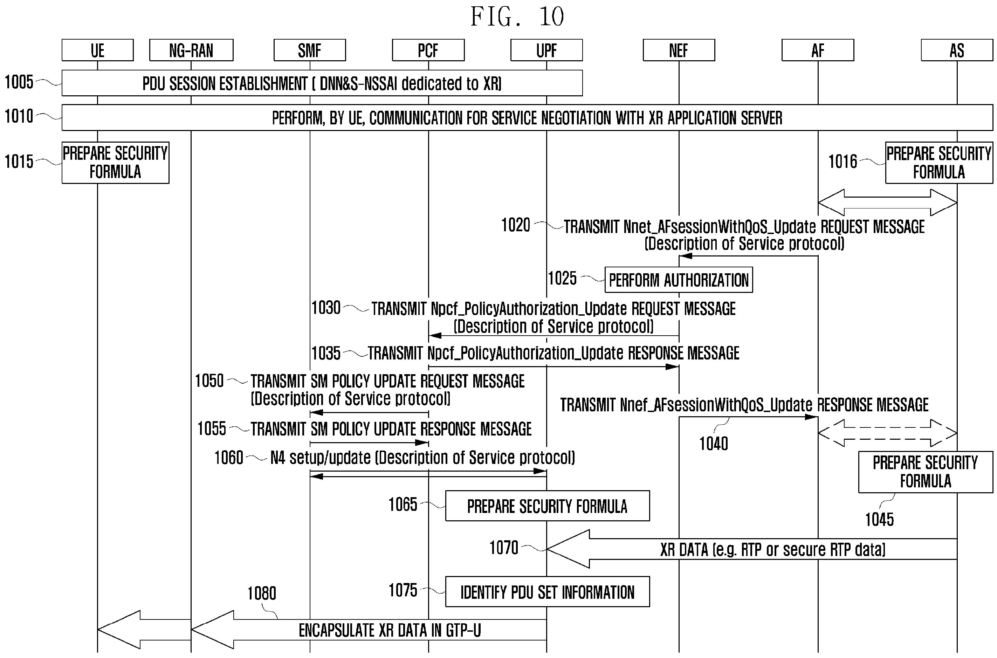

FIG. 10 illustrates a flowchart of a method for an application server to apply information for recognizing a PDU set in a wireless communication system to a network according to an embodiment of the present disclosure.

Referring to FIG. 10, operations of NFs for providing an application-level QoS policy in a communication network may be performed based on features of application data traffic for an XR service. To this end, necessary information needs to be shared between the AS and the UPF so that the UPF may derive (or acquire) the information for recognizing the PDU set from the information in the RTP packet transmitted by the AS (application server) transmitting the XR data.

In operation 1005, the UE may transmit a PDU session establishment request message to the SMF to generate the PDU set in order to receive the XR service. According to an embodiment, the PDU session establishment request message may include the data network name (DNN) and S-NSSAI dedicated to the XR.

In operation 1010, the UE may communicate with the application server (AS) through the generated PDU session to perform a negotiation for the XR service. For example, the UE may negotiate with the AS information such as which encoding method to use or which protocol to use. By the negotiation, the matter regarding what information to be included in the RTP extended header and the information to hide the importance information may also be shared between the AS and the UE.

In operation 1015 and operation 1016, the UE and the AS may prepare the matter regarding what information to be included in the RTP extended header and the information to hide the importance information. (security formula is prepared)

For example, the RTP extended header may include some or all of the following information:
- PDU set sequence number,
- Indication of whether the corresponding PDU is the last PDU in the PDU set,
- Sequence number for a PDU within the PDU set,
- Total size of PDU set (before RTP encoding),
- Total size of PDU set (after RTP encoding),
- Importance of the PDU set, or
- Whether to safely transfer the importance of the PDU set.

In case that the importance of the PDU set is configured to be safely transferred in the RTP extended header, the information for hiding the importance information may include some or all of the following information:
- Initial vector value for the entire extended header for making the entire extended header safe,
- Initial vector value of PDU set importance for making the PDU set safe, or
- Indicator (e.g., a time stamp, a sequence number, a PDU sequence number, a PDU sequence number, a size of a PDU set, or a size of a PDU, etc.) indicating which values among the information in the RTP header or RTP extended header to use for hiding the importance information.

To hide the importance information on the PDU set of the RTP as described above, in case that the AS finally generates the RTP extended header value, if it decides to make the entire extended header safe, the values obtained by XORing the initial vector for the entire extended header, the information (e.g., timestamp, sequence number, etc.) in the RTP header to be used, and the original extended header value with each other may be transferred by being included in the RTP packet transmitted as the extended header.

In case that the UPF receives the IP packet in which the RTP packet including the extended header that has been safely modified as above is encapsulated, the initial vector for the entire extended header, the values obtained by XORing the information (e.g., timestamp, sequence number) in the RTP header to be used, and the received extended header value with each other may be found as the original extended header value. Therefore, the UPF may find out the PDU set information including the PDU set importance information.

In case that the importance information on the PDU set of the RTP is hidden, to make only the importance information (importance or discardibility) in the extended header safe, the AS may reflect the values obtained by XORing the initial vector for the PDU set importance, the information in the RTP header to be used, or the information (e.g., time stamp, sequence number, PDU set sequence number, PDU sequence number, size of PDU set, size of PDU, etc.) in the RTP extended header and the importance value of the original extended header with each other in the extended header as the PDU set importance value, and may transfer the obtained values by including them in the RTP packet to be transmitted.

In case that the UPF receives the IP packet in which the RTP packet including the importance information safely modified as described above is encapsulated, the UPF may find out the values obtained by XORing the initial vector for the PDU set importance, the information in the RTP header to be used, or the information (e.g., time stamp, sequence number, PDU set sequence number, PDU sequence number, size of PDU set, size of PDU, etc.) in the RTP extended header and the importance value of the received extended header with each other as the original PDU set importance value.

Therefore, the UPF may find out the PDU set importance information and include the found PDU set importance information in the PDU set information.

Meanwhile, the present disclosure describes that the XOR calculation is used so that the AS calculates the modified importance value or the modified extended header in case that transmitting the RTP packet, or the UPF calculates the original importance value or the original extended header, but it is not limited thereto, and these can also be calculated using other formulas, and for the sake of convenience of description, it is stated that the XOR calculation is used as an example.

In addition, the PDU set information may include the PDU set sequence number, whether the corresponding PDU is the last PDU of the PDU set, the sequence number of PDU in the PDU set, the PDU set size in bytes, and/or PDU set importance.

In operation 1015 and operation 1016, the AS may transfer the matter regarding what information to be included in the RTP extended header set in the AS and the information to hide the importance information to the AF so that the matter and the information may be set in the UPF of the 5G network.

In operation 1020, the AF may transfer the Nnef_AFsessionWithQoS_Update request message to the NEF, including the matter regarding what information to be included in the RTP extended header and the information to hide the importance information as a QoS requirement, as part of a description of service protocol, or as separate information through the process of updating the QoS for the corresponding PDU session of the 5G network.

The matter regarding what information to be included in the RTP extended header and the information to hide the importance information may include the matters previously described in the descriptions of operations 1010, 1015, and 1016.

In describing the embodiment, the case where the matter regarding what information to be included in the RTP extended header and the information to hide the importance information are included in the description of service protocol is described as an example, but it is stated that the matter and the information may also be applied together even in case that transferred as the separate information from the description of service protocol.

In operation 1025, the NEF may perform the authorization for the request of operation 1020.

In operation 1030, the NEF may transmit an Npcf_PolicyAuthorization_Update request message to the PCF, and in operation 1035, the PCF may transmit an Npcf_PolicyAuthorization_Update response message to the NEF. The description of service protocol information may be transferred to the PCF through the Npcf_PolicyAuthorization_Update request message.

In operation 1050, the PCF may transmit an SM policy update request message to the SMF, and in operation 1055, the PCF may receive an SM policy update response message from the SMF. The description of service protocol information received in operation 1030 may be supplied to the SMF through the SM Policy Update process of operation 1050.

In operation 1060, the SMF may transfer the description of service protocol information to the UPF. In case that the data for the XR service arrives at the UPF, the UPF may distinguish not only the XR service traffic using traffic filters including IP tuples, etc., but also acquire the information included in the RTP extended header to be able to find out the application-level information from the XR data and the information to notify how importance information is hidden in case that the importance information is hidden.

Meanwhile, after the AF receives an Nnef_AFsession WithQoS _Update response message as in operation 1040, the AS may prepare the matter regarding what information to include in RTP extended header and the information to hide the importance information as in operation 1045 instead of operation 1015 and operation 1016 or additionally.

In addition, in operation 1065, the UPF may also prepare the matter regarding what information to be included in the RTP extended header and the information to hide the importance information (security formula is prepared).

In operation 1070, the AS may transmit the XR data to the UPF.

In operation 1075, the UPF may find out the PDU set information for the received packets as follows.

The PDU set information may include the PDU set sequence number, whether the corresponding PDU is the last PDU of the PDU set, the sequence number of PDU in the PDU set, the PDU set size in bytes, and/or the PDU set importance.

That is, the UPF may find out the PDU set information for the received PDU from the information included in the RTP extended header.

However, the total size of the received PDU set may be determined differently depending on whether it is the value before RTP encoding or the value after RTP encoding.

For example, in case that the value is the value before the RTP encoding, the value obtained by adding the size of the RTP overhead to the received PDU set size may be included in the PDU set information as the total size of the PDU set, or in case that the value is the value after the RTP encoding, the value equal to the received PDU set size may be included in the PDU set information as the total size of the PDU set.

Alternatively, depending on the network configuration, in case that the value is the value after the RTP encoding, the value obtained by subtracting the size of the RTP overhead from the received PDU set size may be included in the PDU set information as the total size of the PDU set, or in case that the value is the value before the RTP encoding, the value equal to the received PDU set size may be included in the PDU set information as the total size of the PDU set.

In addition, the UPF that has received the IP packet encapsulated with the RTP packet may find out the importance information on the actual packet from the importance information included in the received RTP extended header. For example, in case that the importance of the PDU set is not safely transferred in operation 1060, the importance value equal to the received importance may be included in the PDU set information as it is.

On the other hand, in case that the importance of the PDU set is configured to be safely transferred, the UPF that has received the IP packet encapsulated with the RTP packet may find out the original importance information before the AS hides the importance information on the RTP extended header using the information to hide the importance information received in operation 1060 by the following method.

For example, in the case where the PDU set importance information on the RTP is configured to be hidden as described above, in case that the initial vector of the RTP extended header value is used, the UPF may find out the value obtained by XORing the initial vector for the entire extended header, and the information (e.g., time stamp, sequence number, etc.) in the RTP header to be used, and the received extended header value with each other as the original extended header. Accordingly, the PDU set information may be acquired from the original extended header found by the same method as in case that the importance information is not hidden.

Alternatively, to make only the PDU set importance information (importance or discardibility) in the extended header safe, the UPF may find out the values obtained by XORing the initial vector for the PDU set importance, the information in the RTP header to be used, or the information (e.g., time stamp, sequence number, PDU set sequence number, PDU sequence number, size of PDU set, size of PDU, etc.) in the RTP extended header and the importance value of the received extended header with each other as the PDU set importance value of the original packet.

In 1080 operation, the UPF may transmit the XR data to the NG-RAN. The obtained PDU set information values may be transferred by being included in the GTP-U header in case that the XR data is transferred to the NG-RAN. The NG-RAN may schedule the packet using the information on the transferred PDU set information value and the QoS profile for the PDU set.

Meanwhile, the UE that has received the XR data from the NG-RAN may refer to the information on the RTP extended header, or may ignore and decode the received RTP extended header value since the RTP extended header values are values that may be previously found through the RTP payload.

The operation steps and methods of FIG. 3 described above are not always necessarily performed, and in some cases, only some of the operation steps and/or methods may be performed. For example, both (i) the method and/or embodiment performed for the UPF to obtain the PDU set information from the RTP extended header and (ii) the method and/or embodiment performed for hiding the importance information may be performed, or only one of the two may be performed.

In addition, the order of the operation steps of FIG. 10 may be changed, and two or more steps may be combined and performed as one step, or at least one step may be omitted.

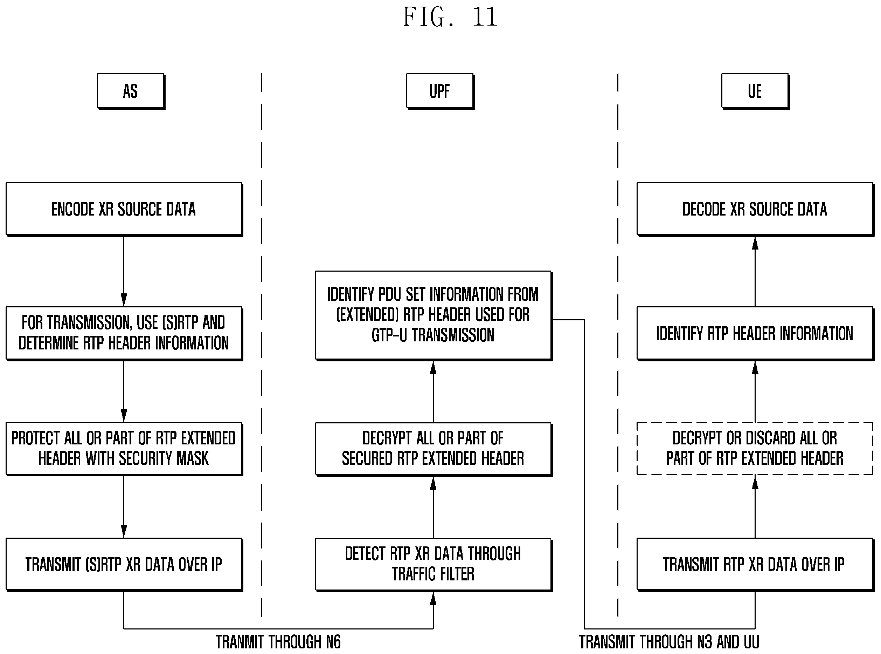

FIG. 11 illustrates a flowchart of a method for processing application data in an application server and a UPF and a UE according to an embodiment of the present disclosure.

The operations of each of the AS, UPF, and UE of FIG. 11 may be performed with reference to the method and embodiment described in FIG. 10.

Referring to FIG. 11, the application server may use the RTP protocol or the secured RTP (SRTP) protocol to encode the XR data for the XR service and transmit the encoded XR data to the UE. In this case, the RTP header information is attached to the RTP packet. In this case, the extended header may be added so that the application-level characteristics may be found from the RTP packet in the 5G network. In addition, in the case of the PDU set importance information among the parameters included in the extended header, since the important information in the RTP packet to be transferred is transferred in plaintext, there is a possibility that an arbitrary attacker may compromise the security of the RTP packet that is considered important information. In order to prevent this, in order to safely transfer all of the added RTP extended header, the importance (or discardibility) information included in the RTP extended header, etc., the AS may modify and transfer the information on the extended header using the secret information (security information) shared between the AS and the UPF or the AS and the UE. In this case, the information to be used may consider the initial vector value and additional information, and whether the original RTP extended header or importance information has been modified may be shared in advance, and the AS may modify the actual information and transmit the modified RTP extended header included in the RTP packet.

Meanwhile, the UPF that has received the XR data may find out the XR traffic through the information such as the traffic filter, find out the RTP extended header value that the AS is originally trying to transmit using the previously shared information, and find out the PDU set information value. The found PDU set information may be transferred by being included in the GTP-U header in case that the UPF forwards data to the NG-RAN.

The NG-RAN that has received the GTP-U header may schedule the PDUs by applying the QoS based on the PDU set by referring to the included PDU set information.

Meanwhile, the UE that has received the XR data from the NG-RAN may find out the value of the RTP extended header originally intended by the AS using the secret information that the received modified RTP extended header previously shares with the AS, if necessary. The method for finding out the value of the originally intended RTP extended header is the same as the method for the UPF to acquire the PDU set information. In case that the UE does not need to perform a separate operation through the RTP extended header, the received modified RTP extended header may be simply discarded. The UE may decode the XR data by receiving the RTP packet using only the RTP header information.

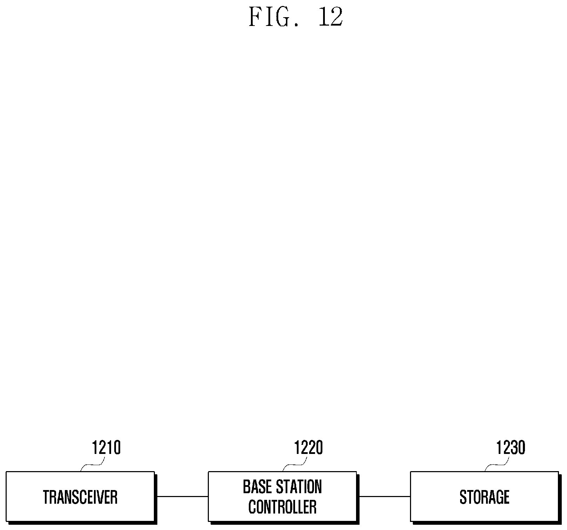

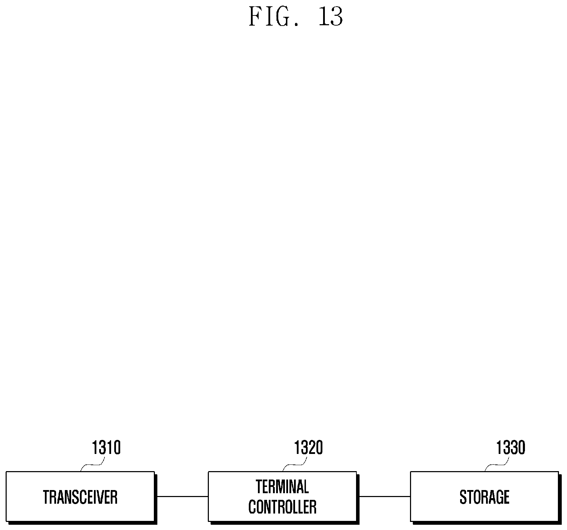

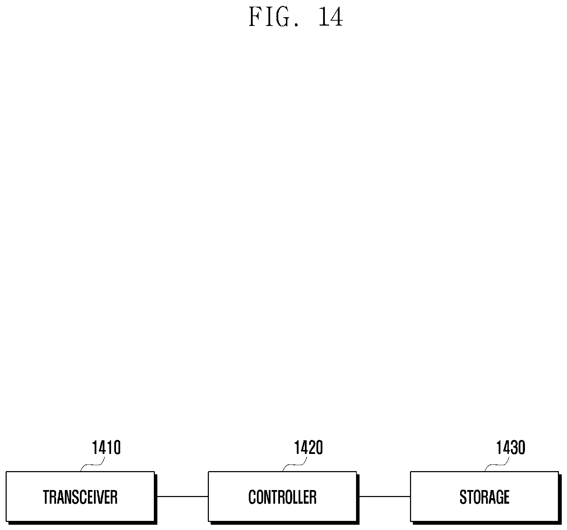

The methods and/or embodiments proposed in the present disclosure may be performed by a base station of FIG. 12, a terminal of FIG. 13, and a network entity of FIG. 14.

FIG. 12 is a diagram illustrating a structure of a base station according to an embodiment of the present disclosure.

Referring to FIG. 12, the base station may include a transceiver 1210, a controller 1220, and a storage 1230. The transceiver 1210, the controller 1220, and the storage1230 may operate according to the communication method of the base station described above. In addition, the network entity may also correspond to the structure of the base station. However, the components of the base station are not limited to the above-described examples. For example, the base station may include more or fewer components than the above-described components. For example, the base station may include the transceiver 1210 and the controller 1220. In addition, the transceiver 1210, the controller 1220, and the storage 1230 may be implemented in the form of a single chip.

The transceiver 1210 is collectively referred to as a receiver of the base station and a transmitter of the base station, and may transmit and receive signals to and from terminals, other base stations, or other network entities. In this case, the transmitted and received signal may include control information and data. The transceiver 1210 may transmit system information to the terminal, for example, and transmit a synchronization signal or a reference signal. To this end, the transceiver 1210 may be composed of an RF transmitter that up-converts a frequency of the transmitted signal and amplifies the transmitted signal, an RF receiver that low-noise amplifies the received signal and down-converts a frequency of the received signal, etc. However, this is only an embodiment of the transceiver 1210, and the components of the transceiver 1210 are not limited to the RF transmitter and the RF receiver. The transceiver 1210 may include a wired and wireless transceiver, and may include various components for transmitting and receiving a signal. In addition, the transceiver 1210 may receive a signal through a communication channel (e.g., a wireless channel) and output the received signal to the controller 1220, and transmit the signal output from the controller 1220 through the communication channel. In addition, the transceiver 1210 may receive a communication signal and output the received communication signal to a processor, and transmit the signals output from the processor to terminals, other base stations, or other entities through a wired or wireless network.

The storage 1230 may store a program and data necessary for the operation of the base station. In addition, the storage 1230 may store control information or data included in a signal acquired from the base station. The storage 1230 may be configured as storage media such as a ROM, a RAM, a hard disk, a CD-ROM, and a DVD, or a combination of storage media. In addition, the storage 1230 may store at least one of the pieces of information transmitted and received through the transceiver 1210 or the information generated through the controller.

In the present disclosure, the controller may be defined as a circuit or an application-specific integrated circuit or at least one processor. The processor may include a communication processor (CP) that performs control for communication and an application processor (AP) that controls higher layers such as application programs. The controller 1220 may control the overall operation of the base station according to the embodiment proposed in the present disclosure. For example, the controller 1220 may control a signal flow between each block to perform the operation according to the flowchart described above.

FIG. 13 is a diagram illustrating a structure of a terminal according to an embodiment of the present disclosure.

Referring to FIG. 13, the terminal may include a transceiver 1310, a controller 1320, and a storage 1330. The transceiver 1310, the controller 1320, and the storage1330 may operate according to the communication method of the terminal described above. However, the components of the terminal are not limited to the above-described examples. For example, the terminal may include more or fewer components than the above-described components. For example, the terminal may include the transceiver 1310 and the controller 1320. In addition, the transceiver 1310, the controller 1320, and the storage 1330 may be implemented in the form of a single chip.

The transceiver 1310 is collectively referred to as a receiver of the terminal and a transmitter of the terminal, and may transmit and receive a signal to and from base stations, other terminals, or other network entities. The signal transmitted and received to and from the base station may include control information and data. The transceiver 1310 may receive system information from the base station, for example, and receive a synchronization signal or a reference signal. To this end, the transceiver 1310 may be composed of an RF transmitter that up-converts a frequency of the transmitted signal and amplifies the transmitted signal, an RF receiver that low-noise amplifies the received signal and down-converts a frequency of the received signal, etc. However, this is only an embodiment of the transceiver 1310, and the components of the transceiver 1310 are not limited to the RF transmitter and the RF receiver. In addition, the transceiver 1310 may include a wired and wireless transceiver, and may include various components for transmitting and receiving a signal. In addition, the transceiver 1310 may receive a signal through a wireless channel, output the received signal to the controller 1320, and transmit a signal output from the controller 1320 through the wireless channel. In addition, the transceiver 1310 may receive a communication signal and output the received communication signal to a processor, and transmit the signal output from the processor to network entities through a wired or wireless network.

The storage 1330 may store a program and data necessary for the operation of the terminal. In addition, the memory may store control information or data included in the signal acquired by the terminal. The storage may be configured as a storage media such as a ROM, a RAM, a hard disk, a CD-ROM, and a DVD, or a combination of storage media.

In the present disclosure, the controller 1320 may be defined as a circuit or an application-specific integrated circuit or at least one processor. The processor may include a communication processor (CP) that performs control for communication and an application processor (AP) that controls higher layers such as application programs. The controller 1320 may control the overall operation of the terminal according to the embodiment proposed in the present disclosure. For example, the controller 1320 may control a signal flow between each block to perform the operation according to the flowchart described above.

FIG. 14 is a diagram illustrating a structure of a network entity performing a network function according to an embodiment of the present disclosure.

The network entity of FIG. 14 may be one of the AMF, SMF, UPF, NEF, NRF, AF, PCF, UDM, NSSF, and NWDAF described above through embodiments of the present disclosure.

Referring to FIG. 14, the network entity performing the network function may include a transceiver 1410, a controller 1420, and storage 1430. In the present disclosure, the controller may be defined as a circuit or an application-specific integrated circuit or at least one processor.

The transceiver 1410 may transmit and receive signals to and from other network entities. For example, the transceiver 1410 may transmit and receive signals or messages to and from the AMF which is the network entity that manages access to and mobility of the UE to the access network.

The controller 1420 may control the overall operation of the network entity performing the network function according to the embodiments proposed in the present disclosure. For example, the controller 1420 may control a signal flow between each block to perform the operation according to the flowchart described above.

The storage 1430 may store at least one of the pieces of information transmitted and received through the transceiver 1410 or the information generated through the controller 1420.

The methods according to the embodiments described in the claims or specifications of the present disclosure may be implemented in the form of hardware, software, or a combination of hardware and software.

In case that implemented in software, a computer-readable storage medium storing one or more programs (software modules) may be provided. One or more programs stored in the computer-readable storage medium are configured for execution by one or more processors within an electronic device. One or more programs include instructions for causing an electronic device to execute methods according to embodiments described in a claim or specification of the present disclosure.

Such programs (software module, software) may be stored in a random access memory, a non-volatile memory including flash memory, a read only memory (ROM), an electrically erasable programmable read only memory (EEPROM), a magnetic disc storage device, a compact disc-ROM (CD-ROM), digital versatile discs (DVDs), any other form of optical storage device, and a magnetic cassette. Alternatively, the programs may be stored in a memory composed of a combination of some or all thereof. In addition, each configuration memory may be included in plurality.

In addition, the program may be stored in an attachable storage device that may accessed via a communication network such as the Internet, the Intranet, a local area network (LAN), wide LAN (WLAN), or a storage area network (SAN), or a combination thereof. Such a storage device may be connected to a device implementing an embodiment of the present disclosure through an external port. Additionally, a separate storage device on the communication network may be connected to the device performing the embodiments of the present disclosure.

In the specific embodiments of the present disclosure described above, components included in the disclosure are expressed in the singular or plural according to the specific embodiments presented. However, the singular or plural expression is appropriately selected for the context presented for convenience of description, and the present disclosure is not limited to the singular or plural components, and even if the component is expressed in plural, the component is configured in singular or even if the component is expressed in singular, the component may be configured in plural.

Meanwhile, the embodiments of the present disclosure disclosed in this specification and drawings present merely specific examples to easily describe the technical contents according to the embodiments of the present disclosure and to help understand the present disclosure, and are not intended to limit the scope of the embodiments of the present disclosure. That is, it will be obvious to those skilled in the art to which the present disclosure pertains that other modifications based on the technical idea of the present disclosure can be realized. In addition, each embodiment may be operated in combination with each other as needed. For example, parts of an embodiment of the present disclosure and parts of another embodiment may be combined with each other to operate a base station and a terminal. In addition, the embodiments of the present disclosure are applicable to other communication systems, and other modifications based on the technical ideas of the embodiments can also be practiced.

## Claims

1. A method performed by an application function (AF) in a wireless communication system, comprising:
transmitting a first message including information related to a congestion situation reporting method preferred by the AF to a network exposure function (NEF);
receiving a second message including a response related to processing of the congestion situation reporting method from the NEF;
in case that the congestion situation reporting method is not available, receiving a third message including information related to a modified congestion situation reporting method from the NEF; and
transmitting a fourth message to the NEF based on the third message.

2. The method of claim 1,
wherein the congestion situation reporting method preferred by the AF is a low latency, low loss, scalable throughput (L4S) method or an application programming interface (API) method.

3. The method of claim 1,
wherein whether the congestion situation reporting method is not available is determined by a session management function (SMF), and
wherein whether the congestion situation reporting method preferred by the AF is not available is determined based on a user plane function (UPF) relocation.

4. The method of claim 1,
wherein the first message is a Nnef_AFsessionWithQoS_Create request message,
wherein the second message is a Nnef_AFsessionWithQoS_Create response message, and
wherein the third message is a Nnef_AFsessionWithQoS_Notify message.

5. A method performed by a session management function (SMF) in a wireless communication system, comprising:
receiving a first message including information related to a congestion situation reporting method preferred by the AF from a policy control function (PCF);
transmitting a second message to the PCF based on the first message;
determining whether the congestion situation reporting method preferred by the AF is not available; and
in case that the congestion situation reporting method is not available, transmitting a third message including information related to a modified congestion situation reporting method to a network function (NF) between the SMF and the AF.

6. The method of claim 5,
wherein the congestion situation reporting method preferred by the AF is a low latency, low loss, scalable throughput (L4S) method or an application programming interface (API) method.

7. The method of claim 5,
wherein whether the congestion situation reporting method preferred by the AF is not available is determined based on a user plane function (UPF) relocation.

8. The method of claim 5,
wherein the information related to the modified method for the congestion situation reporting method included in the third message is transmitted to the AF through the NF.

9. An application function (AF) of a wireless communication system, comprising:
a transceiver; and
a controller,
wherein the controller is configured to:
transmit a first message including information related to a congestion situation reporting method preferred by the AF to a network exposure function (NEF),
receive a second message including a response related to processing of the congestion situation reporting method from the NEF,
in case that the congestion situation reporting method is not available, receive a third message including information related to a modified congestion situation reporting method from the NEF, and
transmit a fourth message to the NEF based on the third message.

10. The AF of claim 9,
wherein the congestion situation reporting method preferred by the AF is a low latency, low loss, scalable throughput (L4S) method or an application programming interface (API) method.

11. The AF of claim 9,
wherein whether the congestion situation reporting method is not available is determined by a session management function (SMF), and
wherein whether the congestion situation reporting method preferred by the AF is not available is determined based on a user plane function (UPF) relocation.

12. The AF of claim 9,
wherein the first message is a Nnef_AFsessionWithQoS_Create request message,
wherein the second message is a Nnef_AFsessionWithQoS_Create response message, and
wherein the third message is a Nnef_AFsessionWithQoS_Notify message.

13. A session management function (SMF) of a wireless communication system, comprising:
a transceiver; and
a controller,
wherein the controller is configured to:
receive a first message including information related to a congestion situation reporting method preferred by the AF from a policy control function (PCF);
transmit a second message to the PCF based on the first message,
determine whether the congestion situation reporting method preferred by the AF is not available, and
in case that the congestion situation reporting method is not available, transmit a third message including information related to a modified congestion situation reporting method to a network function (NF) between the SMF and the AF.

14. The SMF of claim 13,
wherein the congestion situation reporting method preferred by the AF is a low latency, low loss, scalable throughput (L4S) method or an application programming interface (API) method, and
wherein the information related to the modified method for the congestion situation reporting method included in the third message is transmitted to the AF through the NF.

15. The SMF of claim 13,
wherein whether the congestion situation reporting method preferred by the AF is not available is determined based on a user plane function (UPF) relocation.
